# EUROPEAN PATENT APPLICATION

(11) **EP 4 682 450 A1**
(43) Date of publication of application: **21.01.2026**
(21) Application number: 24806992.4
(22) Date of filing: 23.04.2024
(51) Int. Cl.: F25D 23/00, F25D 11/00

(54) **VENTILATION DEVICE**

(30) Priority: 16.05.2023 JP 2023080906
(71) Applicant: Daikin Industries, Ltd., Osaka-shi, Osaka 530-0001 (JP)
(72) Inventor: WAKAZONO Naoki, Osaka-shi, Osaka 530-0001 (JP)
(74) Representative: Hoffmann Eitle
(86) International application number: PCT/JP2024/015900
(87) International publication number: WO 2024/237038

(57) **Abstract**

A ventilation device includes: a lid (60) configured to open and close a ventilation port (VO); a drive mechanism (70) configured to displace the lid (60) between an opening position and a closing position; a sealing member (65) located between the base portion (47) and the lid (60) and surrounding the ventilation port (VO); and a pressing portion (77, 121, 122) configured to press the lid (60) toward the base portion (47).

## Description

### TECHNICAL FIELD

The present disclosure relates to a ventilation device.

### BACKGROUND ART

Patent Document 1 discloses a container ventilation device. The ventilation device is provided in a refrigeration apparatus that cools the internal space of the container body. The ventilation device includes a ventilation port, an opening/closing member configured to open and close the ventilation port, and a motor configured to drive the opening/closing member. When the opening/closing member opens the ventilation port, the internal space and the external space of the container body communicate with each other through the ventilation port. Accordingly, the internal space of the container body is ventilated. When the opening/closing member closes the ventilation port, the internal space and the external space of the container body are blocked from each other. In this manner, the ventilation port of the ventilation device of Patent Document 1 can be opened and closed not manually but automatically.

### CITATION LIST

### PATENT DOCUMENT

PATENT DOCUMENT 1: Japanese Unexamined Patent Publication No. 2009-222323

### SUMMARY OF THE INVENTION

### TECHNICAL PROBLEM

If the structure like the ventilation device of Patent Document 1 in which the ventilation port is automatically opened and closed is employed, a gap may be formed between the lid and the base portion when the lid closes the ventilation port. In this case, the inside and outside of the container body communicate with each other through the gap, which reduces the airtightness of the container body.

The present disclosure is directed to a ventilation device that is intended to prevent a reduction in the airtightness of a container body.

### SOLUTION TO THE PROBLEM

A first aspect is directed to a ventilation device. The ventilation device includes: a base portion (47) having a ventilation port (VO) for allowing an inside and an outside of a container body (2) to communicate with each other; a lid (60) configured to open and close the ventilation port (VO); a drive mechanism (70) configured to displace the lid (60) between an opening position and a closing position; a sealing member (65) located between the base portion (47) and the lid (60) and surrounding the ventilation port (VO); and a pressing portion (77, 121, 122) configured to press the lid (60) toward the base portion (47).

In the first aspect, the lid (60) in the closing position can be pressed toward the base portion (47) by the pressing portion (77, 121, 122). As a result, the sealing member (65) between the lid (60) and the base portion (47) is compressed, and thus the sealing performance of the gap between the lid (60) and the base portion (47) is improved. Accordingly, it is possible to prevent a reduction in the airtightness of the container body (2).

A second aspect is an embodiment of the first aspect. In the second aspect, the pressing portion (77, 121, 122) is provided in the drive mechanism (70).

In the second aspect, the pressing portion (77, 121, 122) is provided in the drive mechanism (70), and thus it is possible to downsize the ventilation device.

A third aspect is an embodiment of the second aspect. In the third aspect, the drive mechanism (70) includes a drive source (71) and a drive shaft (72) driven by the drive source (71), and the pressing portion (77, 121, 122) includes a spring (77) provided along the drive shaft (72).

In the third aspect, the spring (77) can press the lid (60) in the closing position onto the base portion (47). The spring (77) is provided along the drive shaft (72), and thus it is possible to downsize the ventilation device.

A fourth aspect is an embodiment of any one of the first to third aspects. In the fourth aspect, a raised portion (55) projecting toward the sealing member (65) is provided between the lid (60) and the base portion (47).

In the fourth aspect, when the pressing portion (77, 121, 122) presses the lid (60) onto the base portion (47), the raised portion (55) and the sealing member (65) come into line contact with each other. Accordingly, it is possible to improve the sealing performance of part of the sealing member (65) that is provided with the raised portion (55).

A fifth aspect is an embodiment of the fourth aspect. In the fifth aspect, the pressing portion (77, 121, 122) is configured to press a center part of the lid (60) toward the base portion (47). A projecting height of the raised portion (55) increases from the center part of the lid (60) toward an outer edge of the lid (60).

In the fifth aspect, the pressing portion (77, 121, 122) presses the center part of the lid (60), and thus the pressing force on the lid (60) can be less biased. Even with this configuration, the pressing force on the outer edge side of the lid (60) decreases. However, the projecting height of the raised portion (55) toward the sealing member (65) increases from the center part toward the outer edge of the lid (60). Accordingly, the distance between the lid (60) and the raised portion (55) decreases from the center part toward the outer edge of the lid (60). As a result, it is possible to make uniform the compressive force on the sealing member (65), and thus it is possible to improve the sealing performance of the sealing member (65).

A sixth aspect is an embodiment of any one of the first to fifth aspects. In the sixth aspect, the drive mechanism (70) is configured to move the lid (60) in a first direction so as to adjust a distance between the lid (60) and the base portion (47).

In the sixth aspect, the drive mechanism (70) moves the lid (60) in the first direction, thereby adjusting the distance between the lid (60) and the base portion (47). Accordingly, it is possible to adjust the compressive force on the sealing member (65).

A seventh aspect is an embodiment of the sixth aspect. In the seventh aspect, the lid (60) has an opening (CO), and the drive mechanism (70) is configured to rotate the lid (60) so as to adjust an overlapping area of the opening (CO) and the ventilation port (VO).

In the seventh aspect, the drive mechanism (70) rotates the lid (60), thereby adjusting the overlapping area of the opening (CO) of the lid (60) and the ventilation port (VO). Accordingly, it is possible to adjust the amount of ventilation. Here, the drive mechanism (70) can also adjust the distance between the lid (60) and the base portion (47). Accordingly, it is possible to rotate the lid (60) while keeping the distance between the lid (60) and the base portion (47) relatively large. In this case, it is possible to rotate the lid (60) while reducing the friction force generated by the rotation of the lid (60).

An eighth aspect is an embodiment of the seventh aspect. In the eighth aspect, the drive mechanism (70) includes a drive source (71) and a drive shaft (72) rotationally driven by the drive source (71). The drive mechanism (70) is configured to allow the lid (60) to perform a rotating motion in which the lid (60) rotates while the drive shaft (72) rotates and configured to allow the lid (60) to perform a reciprocating motion in which the lid (60) reciprocates in the first direction while the drive shaft (72) rotates.

In the eighth aspect, the drive mechanism (70) allows the lid (60) to perform the rotating motion or the reciprocating motion. When the lid (60) performs the rotating motion, the overlapping area of the opening (CO) of the lid (60) and the ventilation port (VO) is adjusted. When the lid (60) performs the reciprocating motion, the distance between the lid (60) and the base portion (47) is adjusted.

A ninth aspect is an embodiment of the eighth aspect. In the ninth aspect, the drive mechanism (70) includes a rod (73) coupled with one of the drive shaft (72) and the lid (60) and a cam mechanism (80) coupled with the other one of the drive shaft (72) and the lid (60) and having a contact surface (82) which the rod (73) comes into contact with. The contact surface (82) includes a first transmission portion (C1) that transmits a rotational force of the drive shaft (72) to the lid (60) in order to allow the lid (60) to perform the rotating motion and a second transmission portion (C2) that transmits the rotational force of the drive shaft (72) to the lid (60) in order to allow the lid (60) to perform the reciprocating motion.

In the ninth aspect, the rod (73) and the first transmission portion (C1) of the cam mechanism (80) come into contact with each other while the drive shaft (72) rotates, thereby allowing the lid (60) to perform the rotating motion. The rod (73) and the second transmission portion (C2) of the cam mechanism (80) come into contact with each other while the drive shaft (72) rotates, thereby allowing the lid (60) to perform the reciprocating motion.

A tenth aspect is an embodiment of the ninth aspect. In the tenth aspect, the ventilation device includes a low-friction portion (73b) configured to reduce a friction force between the rod (73) and the contact surface (82) of the cam mechanism (80).

In the tenth aspect, the low-friction portion (73b) reduces the friction force between the rod (73) and the contact surface (82) of the cam mechanism (80). Accordingly, it is possible to reduce the wear of the rod (73) and the contact surface (82).

An eleventh aspect is an embodiment of the ninth or tenth aspect. In the eleventh aspect, the rod (73) includes three or more rods (73) coupled with the drive shaft (72).

In the eleventh aspect, it is possible to disperse the force acting between the rod (73) and the cam mechanism (80), and thus it is possible to stabilize the rotating motion and the reciprocating motion of the lid (60).

A twelfth aspect is an embodiment of any one of the seventh to eleventh aspects. In the twelfth aspect, the drive mechanism (70) is configured to perform a first operation to move the lid (60) from a first position to compress the sealing member (65) to a second position more distant from the base portion (47) than the first position, and a second operation to rotate the lid (60) to a predetermined rotational angle while maintaining the lid (60) at the second position after the first operation.

In the twelfth aspect, by the first operation, the lid (60) in the first position moves to the second position, and thus the distance between the lid (60) and the base portion (47) increases. Accordingly, the compressive force on the sealing member (65) decreases. By performing the second operation after the first operation, it is possible to rotate the lid (60) while reducing the friction force generated by the rotation of the lid (60).

A thirteenth aspect is an embodiment of the twelfth aspect. In the thirteenth aspect, after the second operation, the drive mechanism (70) is configured to perform a third operation to move the lid (60) to the first position while maintaining the lid (60) at the predetermined rotational angle.

In the thirteenth aspect, the third operation is performed after the lid (60) reaches the predetermined rotational angle in the second operation. In the third operation, the lid (60) moves to the first position, and thus the distance between the lid (60) and the base portion (47) decreases. Accordingly, the lid (60) is more stable than the lid (60) in the second position, and thus it is possible to reduce the lid (60) being wobbled.

A fourteenth aspect is an embodiment of the thirteenth aspect. In the fourteenth aspect, the predetermined rotational angle includes a first rotational angle at which an entire part of the ventilation port (VO) is closed by the lid (60).

In the fourteenth aspect, when the lid (60) reaches the first angular position in the second operation, the entire part of the ventilation port (VO) is closed by the lid (60), and the ventilation port (VO) is fully closed. In the third operation after this operation, the lid (60) moves to the first position, and thus the distance between the lid (60) and the base portion (47) decreases. Accordingly, the lid (60) is more stable than the lid (60) in the second position, and thus it is possible to reduce the lid (60) being wobbled. In addition, since the lid (60) is in the first position, the sealing member (65) is compressed, and thus the sealing performance of the sealing member (65) is improved. Accordingly, it is possible to reduce the leakage of air between the outside and inside of the container body (2) when the lid (60) fully closes the ventilation port (VO).

A fifteenth aspect is an embodiment of any one of the seventh to fourteenth aspects. In the fifteenth aspect, the ventilation device includes a control unit (100) configured to control the drive mechanism (70) to bring a rotational angle of the lid (60) to a set target value.

In the fifteenth aspect, the control unit (100) adjusts the drive mechanism (70), thereby changing the rotational angle of the lid (60). Accordingly, it is possible to adjust the overlapping area of the opening (CO) of the lid (60) and the ventilation port (VO) and also adjust the amount of ventilation as appropriate.

A sixteenth aspect is an embodiment of any one of the first to fifteenth aspects. In the sixteenth aspect, the ventilation device includes: a refrigerant leakage sensor (110) configured to detect leakage of a refrigerant; and a control unit (100) configured to control the drive mechanism (70) to turn the lid (60) to a closing position when the refrigerant leakage sensor (110) detects leakage of the refrigerant.

In the sixteenth aspect, when the refrigerant leakage sensor (110) detects leakage of the refrigerant, the drive mechanism (70) controlled by the control unit (100) moves the lid (60) to the closing position. Accordingly, it is possible to reduce the refrigerant leaking through the ventilation port (VO). Here, the pressing portion (77, 121, 122) presses the lid (60) toward the base portion (47), it is also possible to reduce the leakage of the refrigerant from the gap between the lid (60) and the base portion (47).

### BRIEF DESCRIPTION OF THE DRAWINGS

[FIG. 1] FIG. 1 is a perspective view of a container refrigeration apparatus according to an embodiment as viewed from the front.
[FIG. 2] FIG. 2 is a vertical cross-sectional view of the container refrigeration apparatus.
[FIG. 3] FIG. 3 is a piping system diagram of the container refrigeration apparatus.
[FIG. 4] FIG. 4 is a block diagram showing the relationship between a control unit for the container refrigeration apparatus and other devices.
[FIG. 5] FIG. 5 is an exploded perspective view of a ventilation device.
[FIG. 6] FIG. 6 is a front view of the ventilation device.
[FIG. 7] FIG. 7 is a cross-sectional view taken along line VII-VII in FIG. 6.
[FIG. 8] FIG. 8 is an enlarged view of part of FIG. 7 surrounded by the dash-dot line and indicated by B1.
[FIG. 9] FIG. 9 is a perspective view of a main part of a drive mechanism as viewed from the back side.
[FIG. 10] FIG. 10 is a back view of the main part of the drive mechanism.
[FIG. 11] FIG. 11 is a top view of the main part of the drive mechanism.
[FIG. 12] FIG. 12 is a front view of an edge forming member.
[FIG. 13] FIG. 13 is a cross-sectional view taken along line XIII-XIII in FIG. 12.
[FIG. 14] FIG. 14 is a schematic configuration diagram showing a reciprocating motion of the drive mechanism. FIG. 14(A) shows that the lid is in the first position. FIG. 14(B) shows that, in the first reciprocating motion, the lid is in the second position. FIG. 14(C) shows that, in the second reciprocating motion, the lid is in the second position.
[FIG. 15] FIG. 15 is a schematic configuration diagram showing a rotating motion of a drive mechanism. FIG. 15(A) shows that the lid is in the closing position. FIG. 15(B) shows that the lid is in the middle position. FIG. 15(C) shows that the lid is in the fully opening position.
[FIG. 16] FIG. 16 is a flowchart of a basic operation of the ventilation device.
[FIG. 17] FIG. 17 is a flowchart of initialization control.
[FIG. 18] FIG. 18 is a front view of a ventilation device according to a first variation.
[FIG. 19] FIG. 19 is a cross-sectional view taken along line XIX-XIX in FIG. 18.
[FIG. 20] FIG. 20 is a schematic configuration diagram showing a reciprocating motion of a lid according to the first variation. FIG. 20(A) shows that the lid is in the first position (the closing position). FIG. 20(B) shows that the lid is in the second position (the opening position).

### DESCRIPTION OF EMBODIMENTS

An embodiment of the present disclosure will be described in detail below with reference to the drawings. The present disclosure is not limited to the embodiment shown below, and various changes can be made within the scope without departing from the technical concept of the present disclosure. Since each of the drawings is intended to illustrate the present disclosure conceptually, dimensions, ratios, or numbers may be exaggerated or simplified as necessary for ease of understanding.

### (1) Overall Configuration of Container

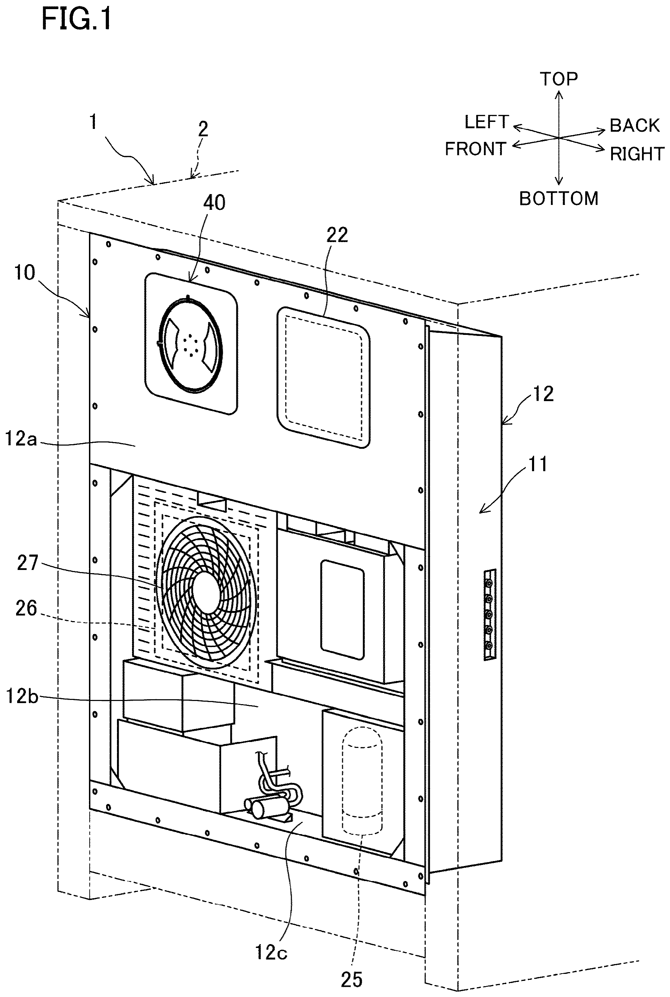

A ventilation device (40) is applied to a container (1). An overall configuration of the container (1) of this embodiment will be described with reference to FIGS. 1 to 3. In the following description, the terms for directions such as "front," "back," "right," "left," "top," and "bottom" refer to the directions of the arrows in FIG. 1.

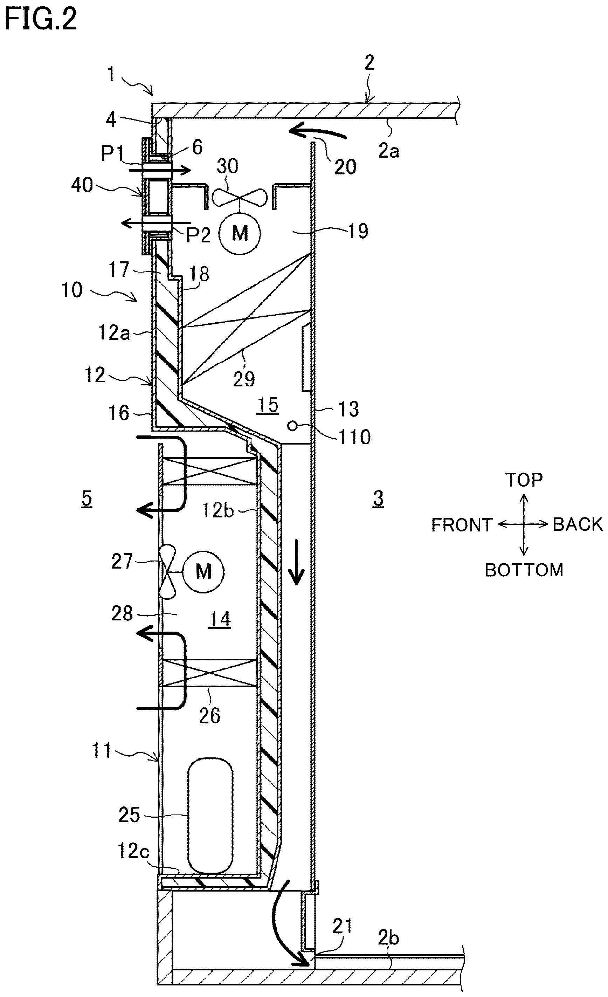

The container (1) is used for marine transportation. The container (1) is a refrigeration container that cools the inside air. The container (1) includes a container body (2) and a container refrigeration apparatus (10). The container body (2) stores stuff such as foods and plants. The container refrigeration apparatus (10) cools an internal space (3) inside the container body (2). As shown in FIG. 2, the container body (2) includes a front surface on which a front opening (4) is formed. The container refrigeration apparatus (10) is attached to the container body (2) so as to close the front opening (4) of the container body (2).

### (2) Container Refrigeration Apparatus

The container refrigeration apparatus (10) includes a casing (11). The casing (11) forms the lid of the front opening (4) of the container body (2). The casing (11) includes a casing body (12) and a partition plate (13). The casing body (12) separates the internal space (3) and an external space (5) that is outside the container body (2). The partition plate (13) is located on the back side (the rear side) of the casing (11).

The container refrigeration apparatus (10) includes a compressor (25), an external heat exchanger (26), and an external fan (27) as external devices. The container refrigeration apparatus (10) includes an internal heat exchanger (29) and an internal fan (30) as internal devices.

### (2-1) Casing Body

As shown in FIG. 2, the casing body (12) includes a flat plate portion (12a) and a recessed portion (12b). The flat plate portion (12a) is an upper part of the casing body (12) that is substantially flush with the front opening (4) of the casing (11). As shown in FIG. 1, the flat plate portion (12a) is provided with an inspection window (22) and the ventilation device (40). The inspection window (22) is disposed in a right part of the flat plate portion (12a). The ventilation device (40) is disposed in a left part of the flat plate portion (12a). The inspection window (22) is a transparent window that allows inspection of the inside of the casing body (12). The ventilation device (40) ventilates the internal space (3).

The recessed portion (12b) is a lower part of the casing (11). The recessed portion (12b) is recessed backward from the lower end of the flat plate portion (12a). An external storage space (14) is formed in front of the recessed portion (12b). An internal storage space (15) is formed above the recessed portion (12b) and between the flat plate portion (12a) and the partition plate (13). The lower end of the recessed portion (12b) forms a bottom plate (12c). The bottom plate (12c) extends between the right and left ends of the casing body (12).

The casing body (12) includes an external casing (16), a heat insulating layer (17), and an internal casing (18), which are stacked in the thickness direction (the front-back direction). The external casing (16) faces the external space (5). The internal casing (18) faces the internal space. The heat insulating layer (17) is provided between the external casing (16) and the internal casing (18). The external casing (16) is made of an aluminum material. The internal casing (18) is made of fiber-reinforced plastic (FRP). The heat insulating layer (17) is made of a foamed resin.

### (2-2) Partition Plate and Air Passage

As shown in FIG. 2, the partition plate (13) is a plate member behind the recessed portion (12b). The partition plate (13) extends in the top-bottom direction while being located at a predetermined distance away from the back surface of the recessed portion (12b). An internal passage (19) through which the inside air flows is formed between the casing body (12) and the partition plate (13). An inflow port (20) is formed between the upper end of the partition plate (13) and the upper wall (2a) of the container body (2). The inflow port (20) allows the internal space (3) and the inflow end of the internal passage (19) to communicate with each other. An outflow port (21) is formed between the lower end of the partition plate (13) and the lower wall (2b) of the container body (2). The outflow port (21) allows the internal space (3) and the outflow end of the internal passage (19) to communicate with each other.

### (2-3) Components in External Space

The external storage space (14) accommodates the compressor (25), the external heat exchanger (26), and the external fan (27). The compressor (25) is installed on the bottom plate (12c) of the casing (11). The compressor (25) is located in a lower part of the external storage space (14). The compressor (25) is located in a right part of the external storage space (14).

The external fan (27) is located in an upper part of the external storage space (14). The external fan (27) is a propeller fan. As shown in FIG. 2, an external passage (28) through which the external air flows is formed behind the external fan (27).

In the external storage space (14), the external heat exchanger (26) is located at the level between the external fan (27) and the compressor (25). The external heat exchanger (26) is located in the external passage (28). The external heat exchanger (26) is a fin-and-tube heat exchanger.

### (2-4) Components of Internal Space

The internal storage space (15) accommodates the internal heat exchanger (29) and the internal fan (30). The internal heat exchanger (29) is supported by the casing (11) so as to extend between the casing body (12) and the partition plate (13). The internal heat exchanger (29) is a fin-and-tube heat exchanger.

### (2-5) Refrigerant Circuit

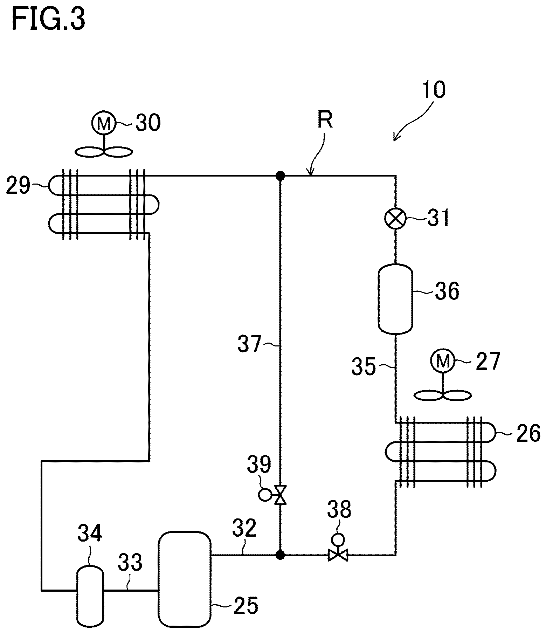

As shown in FIG. 3, the container refrigeration apparatus (10) includes a refrigerant circuit (R). The refrigerant circuit (R) is filled with a refrigerant. The refrigerant circulates in the refrigerant circuit (R) to create a vapor compression refrigeration cycle.

The density of the refrigerant in the refrigerant circuit (R) is higher than that of air. The refrigerant in this example is carbon dioxide (CO₂), which is a natural refrigerant. The natural refrigerant has an ozone depletion potential of zero and a low global warming potential, and has a small impact on the environment. The refrigerant may be propane (R290), ammonia (R717), methane (R50), ethane (R170), butane (R600), or isobutane (R600a). The refrigerant may be difluoromethane (R32), 2,3,3,3-tetrafluoropropene (HFO-1234yf), or 1,3,3,3-tetrafluoropropene (HFO-1234ze). The refrigerant may be a single component refrigerant or may be a refrigerant mixture mixed with another refrigerant. The mixed refrigerant may be a refrigerant composed of two types of substances: 2,3,3,3-tetrafluoropropene (HFO-1234yf) and difluoromethane (R32). The mixed refrigerant may be a refrigerant (R454C) composed of two types of substances: 78.5 wt% of 2,3,3,3-tetrafluoropropene (HFO-1234yf) and 21.5 wt% of difluoromethane (R32).

The refrigerant circuit (R) includes, as main components, the compressor (25), the external heat exchanger (26), an expansion valve (31), and the internal heat exchanger (29).

The compressor (25) compresses a sucked refrigerant. The compressor (25) discharges a compressed refrigerant. The discharge portion of the compressor (25) is connected with a discharge pipe (32). The suction portion of the compressor (25) is connected with a suction pipe (33). The suction pipe (33) is provided with an accumulator (34). The accumulator (34) is a container that stores a liquid refrigerant.

The external heat exchanger (26) exchanges heat between the refrigerant flowing therein and the external air. The gas end of the external heat exchanger (26) communicates with the discharge pipe (32). The liquid end of the external heat exchanger (26) is connected with the liquid end of the internal heat exchanger (29) via a liquid pipe (35). The external heat exchanger (26) functions as a radiator (condenser) through which the refrigerant dissipates heat to the air.

The expansion valve (31) is provided in the liquid pipe (35). The expansion valve (31) decompresses a high-pressure refrigerant to a low-pressure refrigerant. The expansion valve (31) is an electronic expansion valve of which the opening degree is adjustable. A receiver (36) is provided in part of the liquid pipe (35) between the external heat exchanger (26) and the expansion valve (31). The receiver (36) is a container that stores an excessive refrigerant of the refrigerant circuit (R).

The internal heat exchanger (29) exchanges heat between the refrigerant flowing therein and the inside air. The gas end of the internal heat exchanger (29) communicates with the suction pipe (33). The internal heat exchanger (29) functions as an evaporator through which the refrigerant absorbs heat from the air.

The refrigerant circuit (R) includes a bypass pipe (37). The inflow end of the bypass pipe (37) communicates with the discharge pipe (32), and the outflow end of the bypass pipe (37) communicates with the liquid pipe (35). The bypass pipe (37) sends the refrigerant discharged from the compressor (25) to the internal heat exchanger (29) by allowing the refrigerant to bypass the external heat exchanger (26).

The refrigerant circuit (R) is provided with a first valve (38) and a second valve (39). The first valve (38) is provided between the discharge side of the compressor (25) and the gas end of the external heat exchanger (26) and downstream of the connection of the bypass pipe (37). The second valve (39) is provided in the bypass pipe (37). The first valve (38) and the second valve (39) are electromagnetic on-off valves. The first valve (38) and the second valve (39) may be flow rate control valves of which the opening degree is adjustable.

### (2-6) Operation

The container refrigeration apparatus (10) performs a cooling operation and a defrosting operation.

When the cooling operation is performed, the refrigeration cycle is created in which the refrigerant compressed in the compressor (25) is condensed in the external heat exchanger (26), then decompressed in the expansion valve (31), and then evaporated in the internal heat exchanger (29). The air having flowed out from the internal space (3) to the internal passage (19) is cooled by the internal heat exchanger (29) that functions as an evaporator. The cooled air is sent to the internal space (3).

When the defrosting operation is performed, the refrigerant compressed in the compressor (25) flows through the bypass pipe (37) and then flows through the internal heat exchanger (29). The frost on the surface of the internal heat exchanger (29) is melted by the heat of the refrigerant flowing through the inside of the internal heat exchanger (29).

### (3) Ventilation Device

The ventilation device (40) will be described in detail below. In the following description, the "axial direction" refers to the direction in which the axis (X) of the drive shaft (72) extends. The "circumferential direction" refers to the direction in which the drive shaft (72) rotates. The "radial direction" refers to the direction in which the axis (X) of the drive shaft (72) is connected with the outer circumferential surface of the drive shaft (72).

### (3-1) Overall Configuration

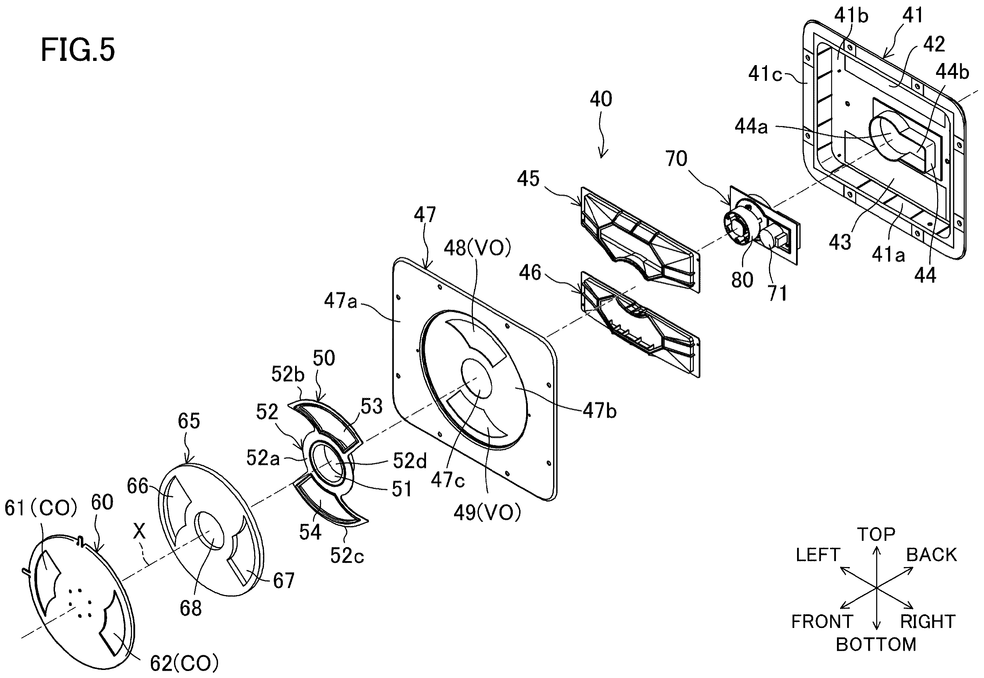

The ventilation device (40) shown in FIGS. 5 to 7 is a container ventilation device that ventilates the internal space (3) of the container body (2). The ventilation device (40) of this embodiment has a supply function of supplying the outside air from the outdoor to the internal space (3) and an exhaust function of discharging the inside air to the external space (5).

As shown in FIG. 2, the ventilation device (40) is provided in a ventilation mounting opening (6) formed in the front surface of the casing body (12). The ventilation mounting opening (6) penetrates through the casing body (12) in the front-back direction. The ventilation mounting opening (6) is formed through the external casing (16), the heat insulating layer (17), and the internal casing (18).

The ventilation device (40) has a supply passage (P1) and an exhaust passage (P2). The supply passage (P1) and the exhaust passage (P2) allow the internal space (3) and the external space (5) to communicate with each other. Specifically, the inflow end of the supply passage (P1) communicates with the external space (5). The outflow end of the supply passage (P1) communicates with the primary side (the upstream side) of the internal fan (30) in the internal passage (19). The inflow end of the exhaust passage (P2) communicates with the secondary side (the downstream side) of the internal fan (30) in the internal passage (19). The outflow end of the exhaust passage (P2) communicates with the external space (5).

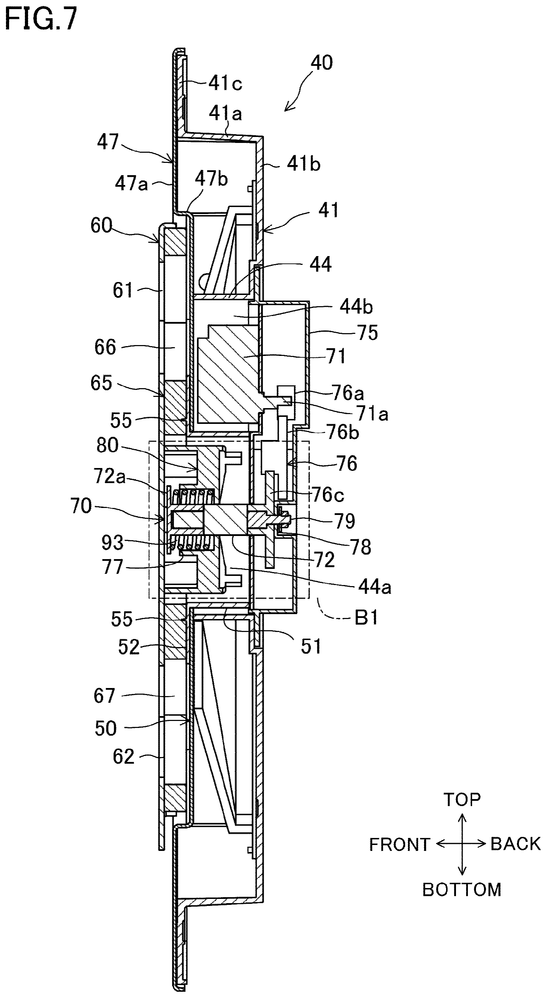

As shown in FIGS. 5 and 7, the ventilation device (40) includes a ventilation case (41), a drive mechanism (70), a supply duct (45), an exhaust duct (46), a base portion (47), an edge forming member (50), a packing (65), and a lid (60) in order from the rear side to the front side.

### (3-2) Ventilation Case

The ventilation case (41) houses the drive mechanism (70), the supply duct (45), and the exhaust duct (46). The ventilation case (41) includes a frame body (41a) that is shaped in a rectangular tube, a side plate (41b) that closes a back opening of the frame body (41a), and a flange (41c) that extends radially outward from the front edge of the frame body (41a). The frame body (41a) is embedded in the heat insulating layer (17). The side plate (41b) is shaped in a rectangular plate. A case-side supply opening (42) is formed in an upper part of the side plate (41b). A case-side exhaust opening (43) is formed in a lower part of the side plate (41b). The case-side supply opening (42) and the case-side exhaust opening (43) have a rectangular shape that is elongate in the right-left direction.

The case-side supply opening (42) is part of the supply passage (P1). The case-side supply opening (42) is open toward the primary side (the upstream side) of the internal fan (30) in the internal passage (19). The case-side exhaust opening (43) is part of the exhaust passage (P2). The case-side exhaust opening (43) is open toward the secondary side (the downstream side) of the internal fan (30) in the internal passage (19).

A housing frame (44) is provided in a center part of the side plate (41b). The housing frame (44) has a tubular shape that protrudes forward from the side plate (41b). The drive mechanism (70) is disposed in the housing frame (44).

### (3-3) Supply Duct and Exhaust Duct

The supply duct (45) is part of the supply passage (P1). The exhaust duct (46) is part of the exhaust passage (P2). The supply duct (45) and the exhaust duct (46) are housed in the ventilation case (41). The supply duct (45) and the exhaust duct (46) have a tubular shape that is elongate in the right-left direction. The cross sections of the supply duct (45) and the exhaust duct (46) become smaller toward the front side. The supply duct (45) is attached to the side plate (41b) so as to be connected to the case-side supply opening (42). The exhaust duct (46) is attached to the side plate (41b) so as to be connected to the case-side exhaust opening (43).

### (3-4) Base Portion

The base portion (47) closes the front opening portion of the ventilation case (41). The base portion (47) faces the external space (5) and is part of the external casing (16). The base portion (47) is made of an aluminum material. The base portion (47) includes a substrate (47a) shaped in a rectangular plate and a circular base-side recessed portion (47b) recessed backward from a center part of the substrate (47a). The substrate (47a) is fastened to the flange (41c) of the ventilation case (41). The substrate (47a) is exposed to the external space (5).

A cylindrical space that is flat in the front-back direction is formed in the base-side recessed portion (47b). A supply port (48) and an exhaust port (49) are formed on the back part of, i.e., the bottom part of the base-side recessed portion (47b). The supply port (48) and the exhaust port (49) are formed around the axis (X). The supply port (48) is formed in an upper part of the base-side recessed portion (47b), and the exhaust port (49) is formed in a lower part of the base-side recessed portion (47b). The supply port (48) and the exhaust port (49) are substantially in a fan shape. The supply port (48) and the exhaust port (49) extend in the circumferential direction. The supply port (48) and the exhaust port (49) are opposite to each other while sandwiching the axis (X).

The supply port (48) is connected to the supply duct (45). The supply port (48) is part of the supply passage (P1). The exhaust port (49) is connected to the exhaust duct (46). The exhaust port (49) is part of the exhaust passage (P2). The supply port (48) and the exhaust port (49) form the ventilation port (VO) for allowing the internal space (3) and the external space (5) of the container body (2) to communicate with each other.

A first insertion hole (47c) is formed in a center part of the bottom part of the base-side recessed portion (47b). The first insertion hole (47c) has a circular shape.

### (3-5) Edge Forming Member

The edge forming member (50) has a function of improving the sealing performance of the packing (65). The edge forming member (50) is located between the base portion (47) and the packing (65). The edge forming member (50) is made of a resin material such as an ABS resin. The edge forming member (50) includes a tubular boss portion (51) fitted into the first insertion hole (47c) and an edge forming plate (52) extending radially outward from the front end of the boss portion (51). In this embodiment, the edge forming member (50) is fixed to the base portion (47).

The edge forming plate (52) includes a disk portion (52a) and a first extension portion (52b) and a second extension portion (52c) that extend radially outward from the disk portion (52a). The disk portion (52a) is formed in a center part of the edge forming plate (52). As viewed in the axial direction, the disk portion (52a) is in a circular shape, and the first extension portion (52b) and the second extension portion (52c) are substantially in a fan shape or an arc shape. The first extension portion (52b) and the second extension portion (52c) are arranged at equal intervals in the circumferential direction. The first extension portion (52b) and the second extension portion (52c) are opposite to each other while sandwiching the axis (X).

A second insertion hole (52d) is formed in the disk portion (52a). The second insertion hole (52d) has a circular shape as viewed in the axial direction.

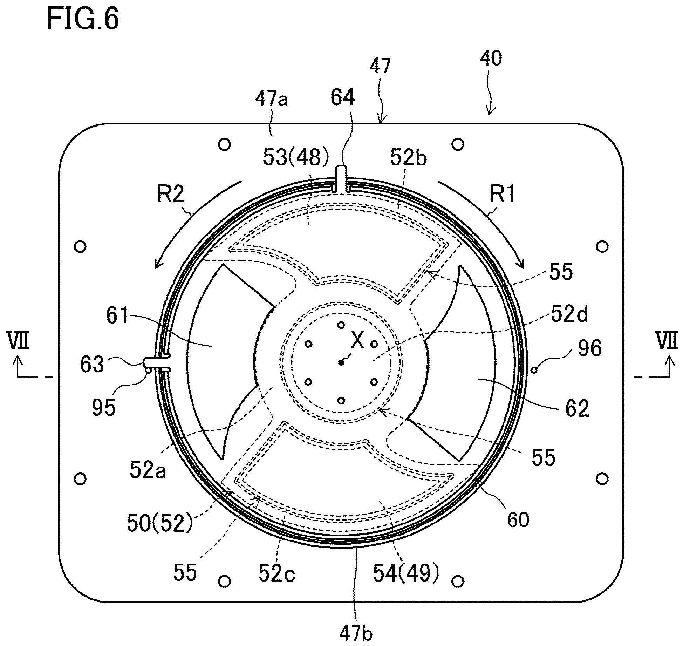

The first extension portion (52b) has a supply communication port (53), and the second extension portion (52c) has an exhaust communication port (54). The supply communication port (53) has substantially the same shape and the same size as the supply port (48). The supply communication port (53) overlaps the supply port (48) in the axial direction. The exhaust communication port (54) has substantially the same shape and the same size as the exhaust port (49). The exhaust communication port (54) overlaps the exhaust port (49) in the axial direction. As shown in FIG. 6, a raised portion (55) is formed on the front surface of the edge forming plate (52). The raised portion (55) will be described in detail later.

### (3-6) Lid

The lid (60) is disposed in the base-side recessed portion (47b) so as to face the external space (5). The lid (60) opens and closes the supply port (48) and the exhaust port (49) as ventilation ports. The lid (60) has a disk shape of which the center is the axis (X). The lid (60) is driven by the drive mechanism (70) to perform a rotating motion and a reciprocating motion. In the rotating motion, the lid (60) rotates about the axis (X). In the reciprocating motion, the lid (60) moves in the axial direction along the axis (X). The lid (60) is made of an aluminum material, for example.

The lid (60) has a lid-side supply opening (61) and a lid-side exhaust opening (62) as openings. The lid-side supply opening (61) and the lid-side exhaust opening (62) are substantially in a fan shape. The lid-side supply opening (61) and the lid-side exhaust opening (62) extend in the circumferential direction. The lid-side supply opening (61) and the lid-side exhaust opening (62) are opposite to each other while sandwiching the axis (X). The lid-side supply opening (61) has substantially the same shape and the same size as the supply port (48) and the supply communication port (53). The lid-side exhaust opening (62) has substantially the same shape and the same size as the exhaust port (49) and the exhaust communication port (54).

The lid-side supply opening (61) can communicate with the supply port (48) and the supply communication port (53) while the lid (60) rotates. The lid-side exhaust opening (62) can communicate with the exhaust port (49) and the exhaust communication port (54) while the lid (60) rotates. The lid-side supply opening (61) is part of the supply passage (P1), and the lid-side exhaust opening (62) is part of the exhaust passage (P2). The lid-side supply opening (61) and the lid-side exhaust opening (62) form a lid-side opening (CO) of which the area that overlaps the ventilation port (VO) is adjusted.

### (3-7) Packing

The packing (65) is disposed in the base-side recessed portion (47b). The packing (65) is located between the base portion (47) and the lid (60) and surrounding the supply port (48) and the exhaust port (49) as ventilation ports. More precisely, the packing (65) is located between the lid (60) and the edge forming plate (52) and surrounds the supply communication port (53) and the exhaust communication port (54). The packing (65) seals the gap between the lid (60) and the base portion (47). The sealing member (65) reduces communication through a gap between the external space (5) and the internal space (3).

The packing (65) has a disk shape of which the center is the axis (X). The packing (65) is fixed to the back surface of the lid (60). The packing (65) is made of an elastic resin material. The packing (65) is elastically deformed by being compressed in the axial direction (the thickness direction). In one preferred embodiment, the packing (65) is a closed cell foam, such as a polyethylene foam.

The packing (65) has a packing-side supply opening (66), a packing-side exhaust opening (67), and a center hole (68). The packing-side supply opening (66) has substantially the same shape and the same size as the lid-side supply opening (61). When the packing (65) is fixed to the back of the lid (60), the entire part of the lid-side supply opening (61) and the entire part of the packing-side supply opening (66) overlap each other in the axial direction. The packing-side exhaust opening (67) has substantially the same shape and the same size as the lid-side exhaust opening (62). When the packing (65) is fixed to the back of the lid (60), the entire part of the lid-side exhaust opening (62) and the entire part of the packing-side exhaust opening (67) overlap each other in the axial direction. The center hole (68) has substantially the same shape and the same size as the first insertion hole (47c) and the second insertion hole (52d). The center hole (68) overlaps the first insertion hole (47c) and the second insertion hole (52d) in the axial direction.

The packing (65) can rotate with the lid (60). The packing-side supply opening (66) can communicate with the supply port (48) and the supply communication port (53) while the lid (60) rotates. The packing-side exhaust opening (67) can communicate with the exhaust port (49) and the exhaust communication port (54) while the lid (60) rotates. The packing-side supply opening (66) is part of the supply passage (P1), and the packing-side exhaust opening (67) is part of the exhaust passage (P2).

### (3-8) Drive Mechanism

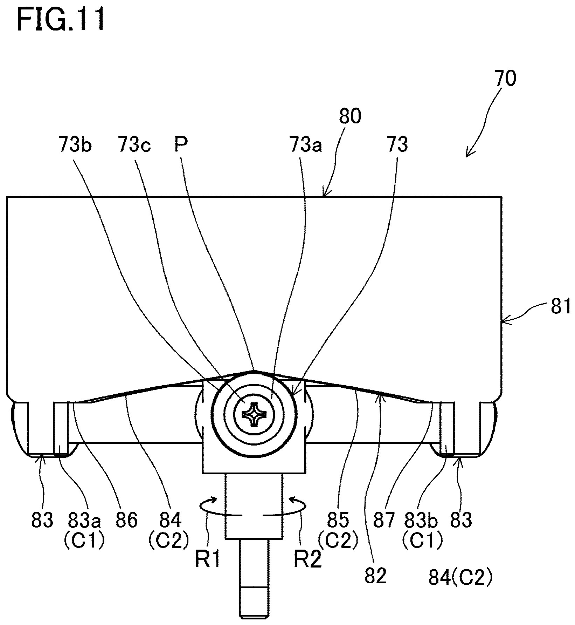

A configuration of the drive mechanism (70) will be described with reference to FIGS. 5 to 12.

### (3-8-1) Overall Configuration

The drive mechanism (70) drives the lid (60). The drive mechanism (70) displaces the lid (60) between a closing position in which the lid (60) closes the ventilation port (VO) and an opening position (more precisely, a fully opening position) in which the lid (60) opens the ventilation port (VO). The drive mechanism (70) includes a motor (71) as a drive source and a drive shaft (72) driven by the motor (71). The drive mechanism (70) of this embodiment is configured to allow the lid (60) to perform a rotating motion in which the lid (60) rotates while the drive shaft (72) rotates and configured to allow the lid (60) to perform a reciprocating motion in which the lid (60) reciprocates in the axial direction as the first direction while the drive shaft (72) rotates. The drive mechanism (70) includes a rod (73) coupled with the drive shaft (72) and a cam mechanism (80) coupled with the lid (60). The drive mechanism (70) includes a drive case (75) and a transmission mechanism (76) that transmits the rotational force of an output shaft (71a) of the motor (71) to the drive shaft (72). The drive mechanism (70) is provided with a spring (77) that presses the lid (60) toward the base portion (47).

As shown in FIGS. 5 and 7, the housing frame (44) has a first storage space (44a) in a tubular shape and a second storage space (44b) in a prismatic shape. The first storage space (44a) houses the cam mechanism (80) and the drive shaft (72). The second storage space (44b) houses the motor (71). The second storage space (44b) is a sealed space that is hermetically separated from the first storage space (44a). Accordingly, it is possible to reduce water droplets or the like leaking to the periphery of the motor (71).

### (3-8-2) Motor and Transmission Mechanism

The motor (71) is a stepping motor. The output shaft (71a) of the motor (71) extends backward in parallel with the axis (X). The motor (71) rotationally drives the output shaft (71a) reversibly.

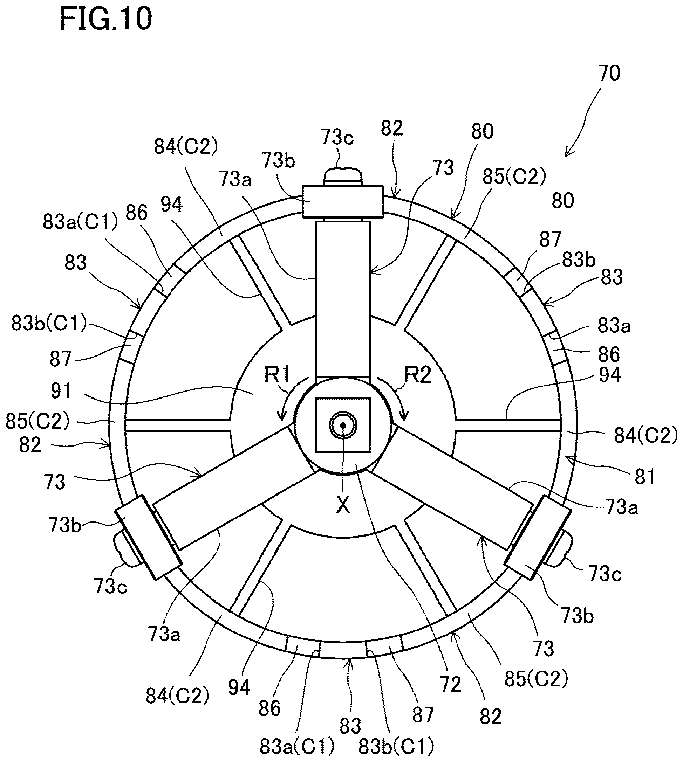

The transmission mechanism (76) is provided behind the motor (71) and the drive shaft (72). The transmission mechanism (76) of this embodiment includes a pinion (76a), a first gear (76b), and a second gear (76c). The pinion (76a) is fixed to the output shaft (71a). The first gear (76b) meshes with the pinion (76a) and the second gear (76c). The second gear (76c) is coupled with the back end portion of the drive shaft (72). When the output shaft (71a) of the motor (71) rotates, the rotational force is transmitted to the drive shaft (72) through the pinion (76a), the first gear (76b), and the second gear (76c). Accordingly, the drive shaft (72) is rotationally driven by the motor (71). The drive shaft (72) can rotate in the first rotation direction (R1) and the second rotation direction (R2) shown in FIG. 10.

### (3-8-3) Drive Shaft

The drive shaft (72) extends from the second gear (76c) toward the lid (60) in the thickness direction of the lid (60). The direction in which the axis (X) of the drive shaft (72) extends corresponds to the thickness direction of the lid (60) and the direction of air flowing through the supply passage (P1) and the exhaust passage (P2). The drive shaft (72) is made of a metal material such as SUS.

The drive shaft (72) is rotatably fixed to a fixing plate (78) by a fixing tool (79). The fixing plate (78) rotatably supports the drive shaft (72). The fixing tool (79) prohibits the drive shaft (72) from moving in the axial direction.

A flange portion (72a) in a disk shape is formed on the end portion (the front end portion) of the drive shaft (72) that is close to the lid (60). The flange portion (72a) is coaxial with the axis (X) of the drive shaft (72). The outer diameter of the flange portion (72a) is larger than the outer diameter of the drive shaft (72). The flange portion (72a) has a support plate that supports one end of the spring (77).

### (3-8-4) Rod

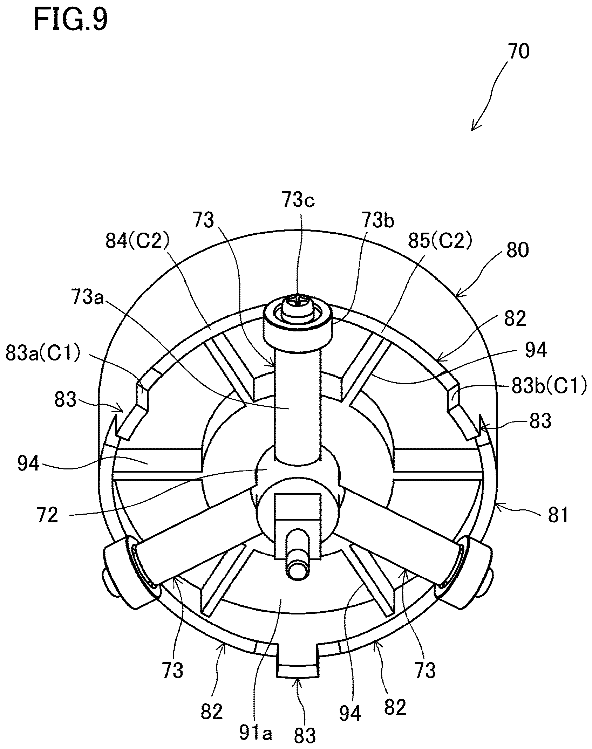

As shown in FIGS. 9 to 11, three rods (73) are fixed to the drive shaft (72). Each rod (73) has a rod shape that extends radially outward from the outer circumferential surface of the drive shaft (72). Each rod (73) extends in the direction perpendicular to the axis (X). The three rods (73) are arranged at equal intervals in the circumferential direction.

The number of rods (73) may be one or two, but may be three or more in one preferred embodiment. If three or more rods (73) are provided, it is possible to disperse the force acting between the rods (73) and the cam mechanism (80). Accordingly, it is possible to stabilize the rotating motion and the reciprocating motion of the lid (60). If four or more rods (73) are provided, the load torque of the motor (71) increases excessively. Thus, the number of rods (73) may be three in one preferred embodiment.

Each rod (73) includes a rod body (73a) coupled with the drive shaft (72) and a ringshaped bearing (73b) provided on a radially outer end portion of the rod body (73a). The bearing (73b) is rotatably supported on the rod body (73a) by a bolt (73c), for example. The bearing (73b) can rotate about the axis of the rod body (73a). The rotational axis of the bearing (73b) extends in the radial direction of the drive shaft (72). The bearing (73b) comes into contact with the contact surface (82) of the cam mechanism (80). When the bearing (73b) comes into contact with the contact surface (82), the bearing (73b) rotates about its axis. Accordingly, it is possible to reduce the friction force between the rod (73) and the contact surface (82) of the cam mechanism (80). The bearing (73b) is configured as a low-friction portion that reduces the friction force (the frictional resistance) between the cam mechanism (80) and the rod (73).

The bearing (73b) may be made of a material with higher wear resistance than the rod body (73a) in one preferred embodiment. The rod body (73a) is made of a metal material such as SUS. The bearing (73b) is made of a resin material such as polyacetal.

### (3-8-5) Cam Mechanism

The cam mechanism (80) is coupled with the lid (60) and transmits the power of the drive shaft (72) to the lid (60). The outer shape of the cam mechanism (80) is a cylindrical shape that is coaxial with the axis (X). The front end of the cam mechanism (80) is fastened to a center part of the back surface of the lid (60).

The cam mechanism (80) has a circumferential wall (81) with a cylindrical shape that is coaxial with the axis (X). The contact surface (82) which the bearing (73b) as a contact portion of the rod (73) comes into contact with is formed on the end portion of the circumferential wall (81) that is close to the rod (73). The contact surface (82) includes a first transmission portion (C1) and a second transmission portion (C2). The first transmission portion (C1) is a contact surface for transmitting the rotational force of the drive shaft (72) to the lid (60) in order to allow the lid (60) to perform a rotating motion. The second transmission portion (C2) is a contact surface for transmitting the rotational force of the drive shaft (72) to the lid (60) in order to allow the lid (60) to perform a reciprocating motion.

The structure of the contact surface (82) will be further described in detail below. Three projecting plates (83) are formed on the end portion of the circumferential wall (81) that is close to the rod (73). The number of projecting plates (83) is the same as the number of rods (73). The number of projecting plates (83) may be one, two, four, or more, and may be different from the number of rods (73). The projecting plate (83) is shaped in a rectangular plate with the same thickness as the circumferential wall (81).

Part of the contact surface (82) that is between the projecting plates (83) adjacent in the circumferential direction to each other is recessed in a V-shape toward the lid (60). This recessed portion has a first inclined surface (84) and a second inclined surface (85) that sandwich the top portion (P) of the recessed portion. The top portion (P) is part of the contact surface (82) of the circumferential wall (81) that is at the minimum distance in the axial direction from the lid (60). The top portion (P) is in a middle position in the circumferential direction between the projecting plates (83) adjacent to each other. The first inclined surface (84) extends in the first rotation direction (R1) from the top portion (P). The first inclined surface (84) is inclined so as to come closer to the rod (73) in the first rotation direction (R1). The second inclined surface (85) extends in the second rotation direction from the top portion (P). The second inclined surface (85) is inclined so as to come closer to the rod (73) in the second rotation direction. The inclination angle of the first inclined surface (84) and the inclination angle of the second inclined surface (85) with respect to the plane perpendicular to the axis (X) of the drive shaft (72) are equal to each other. The circumferential length of the first inclined surface (84) and the circumferential length of the second inclined surface (85) are equal to each other. The first inclined surface (84) and the second inclined surface (85) are symmetric with respect to the top portion (P).

The first inclined surface (84) and the second inclined surface (85) form the first transmission portion (C1) which the rod (73) comes into contact with. The first inclined surface (84) and the second inclined surface (85) are inclined with respect to the plane perpendicular to the axis (X). Accordingly, the first inclined surface (84) and the second inclined surface (85) convert the force in the rotation direction from the rod (73) into the force in the axial direction, and transmit the resultant force to the lid (60).

A first end surface (83a) is formed on a side surface of the projecting plate (83) that is close to the first inclined surface (84). The first end surface (83a) is a surface of the projecting plate (83) that faces in the second rotation direction (R2). A second end surface (83b) is formed on a side surface of the projecting plate (83) that is close to the second inclined surface (85). The second end surface (83b) is a surface of the projecting plate (83) that faces in the first rotation direction (R1). The first end surface (83a) and the second end surface (83b) form the second transmission portion (C2) which the rod (73) comes into contact with. By having surfaces along the axis (X), the first end surface (83a) and the second end surface (83b) transmit the force in the rotation direction from the rod (73) to the lid (60) without alteration.

A first flat surface (86) is formed on part of the contact surface (82) that is between the first inclined surface (84) and the first end surface (83a). A second flat surface (87) is formed on part of the contact surface (82) that is between the second inclined surface (85) and the second end surface (83b). The first flat surface (86) and the second flat surface (87) are along the plane perpendicular to the axis (X). The circumferential lengths of the first flat surface (86) and the second flat surface (87) are substantially equal to the diameter of the contact portion of the rod (73), or specifically, the diameter of the bearing (73b).

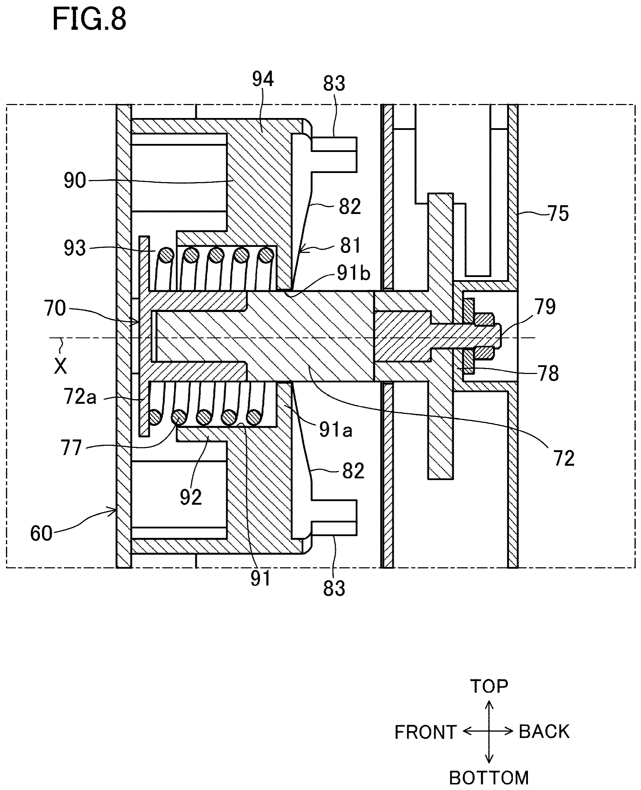

As shown in FIG. 8, an inner plate (90) that is substantially in a disk shape is formed in the cam mechanism (80). An annular recessed portion (91) that is recessed toward the rod (73) and an annular raised portion (92) that projects toward the lid (60) are formed in a center part of the inner plate (90). A shaft hole (91b) which the drive shaft (72) penetrates through is formed in a center part of a support bottom plate (91a), which is the bottom part of the annular recessed portion (91). The annular raised portion (92) has a tubular shape that surrounds the drive shaft (72). The flange portion (72a), the support bottom plate (91a) of the annular recessed portion (91), the annular raised portion (92), and the drive shaft (72) define a spring storage space (93) that stores the spring (77).

As shown in FIG. 9, the surface of the support bottom plate (91a) of the cam mechanism (80) that is close to the rod (73) is provided with a plurality of ribs (94). The plurality of ribs (94) extend in the radial direction from the outer circumferential surface of the annular recessed portion (91) to the inner circumferential surface of the circumferential wall (81). The plurality of ribs (94) are arranged at equal intervals in the circumferential direction. The ribs (94) form the reinforcing portions that reinforce the support bottom plate (91a) on which the pressing force of the spring (77) acts.

### (3-8-5) Spring

As shown in FIG. 8, the spring (77) of this embodiment is provided in the drive mechanism (70). The spring (77) forms a pressing portion that presses the lid (60) toward the base portion (47). The spring (77) has a helical shape. The spring (77) is coiled around the axis (X), thereby extending in the axial direction as a whole. The spring (77) is made of a metal wire material such as SUS and tungsten.

The drive shaft (72) is disposed inside the spring (77). In other words, the spring (77) has a helical shape so as to be coiled around the drive shaft (72).

One end of the spring (77) comes into contact with the flange portion (72a) of the drive shaft (72). The one end of the spring (77) may be fixed to or may not be fixed to the flange portion (72a). The other end of the spring (77) comes into contact with the support bottom plate (91a). In this manner, the spring (77) is sandwiched and held between the flange portion (72a) and the support bottom plate (91a). The flange portion (72a) and the support bottom plate (91a) are opposite to each other and form a first surface and a second surface that hold the spring (77). The first surface is provided on the drive shaft (72), and the second surface is provided on the cam mechanism (80) coupled with the lid (60).

As described above, the drive shaft (72) is prohibited from moving in the axial direction. Accordingly, the biasing force of the spring (77) acts to allow the cam mechanism (80) to move backward. By this biasing force, the lid (60) coupled with the cam mechanism (80) is pressed toward the base portion (47). When the lid (60) is pressed onto the base portion (47), the packing (65) between the lid (60) and the base portion (47) is compressed in the thickness direction. Accordingly, the sealing performance of the packing (65) is improved.

### (3-9) Details of Edge Forming Plate

As shown in FIGS. 6, 12, and 13, raised portions (55) that project toward the packing (65) are provided between the packing (65) and the base portion (47). The raised portion (55) has a tapered shape that becomes thin toward the packing (65). The raised portions (55) compress the packing (65) to improve the sealing performance of the packing (65). The raised portion (55) includes an supply-side raised portion (56) that corresponds to the supply communication port (53), an exhaust-side raised portion (57) that corresponds to the exhaust communication port (54), and a central raised portion (58) that corresponds to the second insertion hole (52d).

The supply-side raised portion (56) is shaped in a closed loop that surrounds the supply communication port (53). When the lid (60) is in the fully closing position, the supply-side raised portion (56) is in line contact with part of the packing (65) that corresponds to the outer edge of the supply communication port (53). Accordingly, the sealing performance between the packing (65) and the outer edge of the supply communication port (53) is improved.

The exhaust-side raised portion (57) is shaped in a closed loop that surrounds the exhaust communication port (54). When the lid (60) is in the fully closing position, the exhaust-side raised portion (57) is in line contact with part of the packing (65) that corresponds to the outer edge of the exhaust communication port (54). Accordingly, the sealing performance between the packing (65) and the outer edge of the exhaust communication port (54) is improved.

The structures of the supply-side raised portion (56) and the exhaust-side raised portion (57) are basically the same, but may be different from each other. Each of the supply-side raised portion (56) and the exhaust-side raised portion (57) has an outer circumferential portion (55a), an inner circumferential portion (55b), a first side edge portion (55c), and a second side edge portion (55d). The outer circumferential portion (55a) is located near the outer circumferential edge of the edge forming plate (52). The outer circumferential portion (55a) has an arc shape along the outer circumferential edge of the edge forming plate (52) as viewed in the axial direction. The inner circumferential portion (55b) is located near the inner circumferential edge of the edge forming plate (52), i.e., near the second insertion hole (52d). The inner circumferential portion (55b) has an arc shape along the inner circumferential edge of the edge forming plate (52).

The first side edge portion (55c) is continuous in the circumferential direction with one end of the outer circumferential portion (55a) and one end of the inner circumferential portion (55b). The one end referred to herein corresponds to the end portion in the first rotation direction (R1). The first side edge portion (55c) extends substantially linearly between one end of the outer circumferential portion (55a) and one end of the inner circumferential portion (55b).

The second side edge portion (55d) is continuous in the circumferential direction with the other end of the outer circumferential portion (55a) and the other end of the inner circumferential portion (55b). The other end referred to herein corresponds to the end portion in the second rotation direction (R2). The second side edge portion (55d) extends substantially in an arc shape between the other end of the outer circumferential portion (55a) and the other end of the inner circumferential portion (55b). The second side edge portion (55d) has an arc shape that is raised in the first rotation direction (R1).

The central raised portion (58) is shaped in a closed loop that surrounds the second insertion hole (52d). The central raised portion (58) is in line contact with part of the packing (65) that corresponds to the outer edge of the second insertion hole (52d). Accordingly, the sealing performance between the packing (65) and the outer edge of the second insertion hole (52d) is improved.

The projecting height of the raised portion (55) increases from the center part of the lid (60) toward the outer edge of the lid (60). In other words, the projecting height of the raised portion (55) increases toward the radially outer side of the edge forming plate (52). Here, the spring (77) presses the center part of the lid (60) toward the base portion (47) as viewed in the axial direction. Accordingly, the pressing force on the lid (60) decreases from the center part toward the outer edge of the lid (60). As a result, the compressive force of the packing (65) caused by the spring (77) decreases from the center part toward the outer edge of the lid (60). As a solution, by making the projecting height of the raised portion (55) higher toward the radially outer side of the edge forming plate (52), it is possible to make the compressive force of the packing (65) uniform over the whole. As a result, the sealing performance of the packing (65) can be improved.

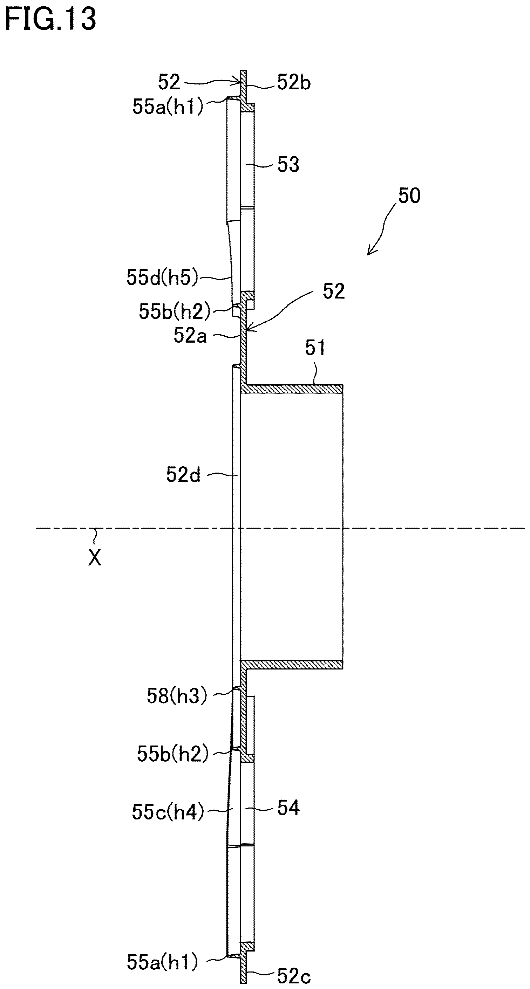

Specifically, as shown in FIG. 13, where h1 is the projecting height of the outer circumferential portion (55a), h2 is the projecting height of the inner circumferential portion (55b), and h3 is the projecting height of the central raised portion (58), h1 is greater than h2, and h2 is greater than h3. The projecting height h1 of the outer circumferential portion (55a) is uniform over the whole. The projecting height h2 of the inner circumferential portion (9) is uniform over the whole. The projecting height of the central raised portion (58) is uniform over the whole.

The projecting height h4 of the first side edge portion (55c) increases from the center part of the lid (60) toward the outer edge of the lid (60). In other words, the projecting height h4 of the first side edge portion (55c) increases toward the radially outer side of the edge forming plate (52).

The projecting height h5 of the second side edge portion (55d) increases from the center part of the lid (60) toward the outer edge of the lid (60). In other words, the projecting height h5 of the second side edge portion (55d) increases toward the radially outer side of the edge forming plate (52).

### (3-10) Restriction Mechanism

The ventilation device (40) has a restriction mechanism for restricting the lid (60) to rotate about the base portion (47). As shown in FIG. 6, the restriction mechanism includes a first lid-side raised portion (63) and a second lid-side raised portion (64) provided on the lid (60), and a first pin (95) and a second pin (96) provided on the base portion (47).

The first lid-side raised portion (63) and the second lid-side raised portion (64) project radially outward from the outer edge of the lid (60). The first lid-side raised portion (63) and the second lid-side raised portion (64) are displaced from each other by about 90 degrees in the circumferential direction. The first lid-side raised portion (63) is disposed on part of the outer edge of the lid (60) that is near the lid-side supply opening (61). The second lid-side raised portion (64) is disposed on part of the outer edge of the lid (60) that is between the lid-side supply opening (61) and the lid-side exhaust opening (62) in the circumferential direction.

The first pin (95) and the second pin (96) are formed on the substrate (47a) of the base portion (47). The first pin (95) and the second pin (96) project from the substrate (47a) toward one end in the axial direction, i.e., toward the front. The first pin (95) and the second pin (96) are displaced from each other by about 180 degrees in the circumferential direction. The first pin (95) and the second pin (96) are disposed on the outer edge of the base-side recessed portion (47b). The first pin (95) is located in a position displaced from the supply port (48) by about 90 degrees in the second rotation direction (R2), and the second pin (96) is located in a position displaced from the exhaust port (49) by about 90 degrees in the second rotation direction (R2).

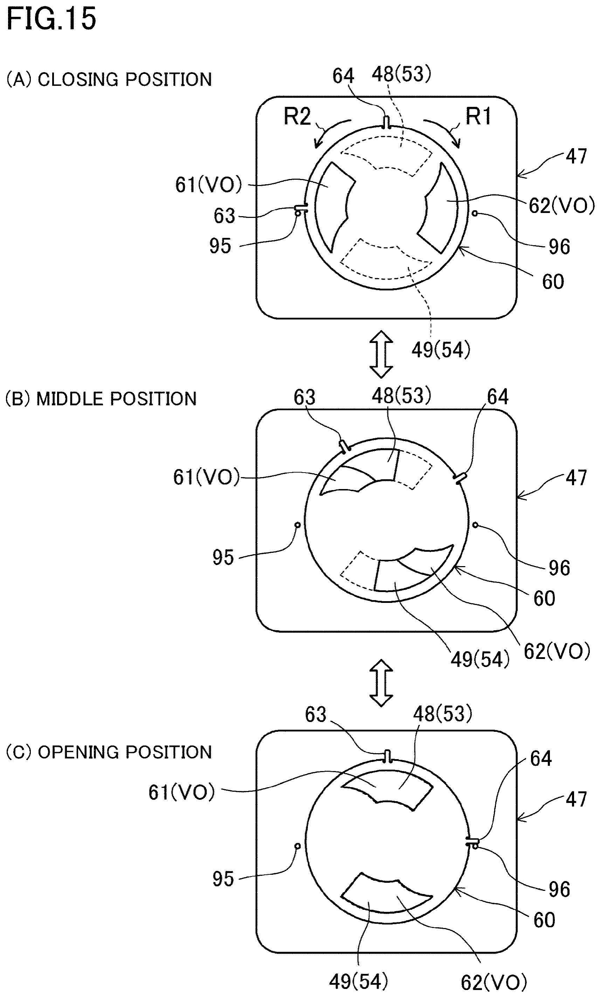

As shown in FIG. 15(A), the first lid-side raised portion (63) and the first pin (95) are in contact with each other when the lid (60) is at a first rotational angle (θ1) and fully closes the ventilation port (VO). Specifically, the side edge of the first lid-side raised portion (63) that is in the second rotation direction (R2) comes into contact with the first pin (95). Accordingly, the lid (60) at the first rotational angle (θ1) is prohibited from further rotating in the second rotation direction (R2) by the first lid-side raised portion (63) and the first pin (95). The first lid-side raised portion (63) and the first pin (95) form a first restriction mechanism that restricts the lid (60) configured to fully close the ventilation port (VO) from rotating in the direction that allows the ventilation port (VO) to close.

As shown in FIG. 15(C), the second lid-side raised portion (64) and the second pin (96) are in contact with each other when the lid (60) is at a second rotational angle (θ2) and fully opens the opening (CO). Specifically, the side edge of the second lid-side raised portion (64) that is in the first rotation direction (R1) comes into contact with the second pin (96). Accordingly, the lid (60) at the second rotational angle (θ2) is prohibited from further rotating in the first rotation direction (R1) by the second lid-side raised portion (64) and the second pin (96). The second lid-side raised portion (64) and the second pin (96) form a second restriction mechanism that restricts the lid (60) configured to fully open the ventilation port (VO) from rotating in the direction that allows the ventilation port (VO) to open.

With the above-described configuration, the rotational angle of the lid (60) of this embodiment can be adjusted within the range from the first rotational angle (θ1 = 0°) to the second rotational angle (θ2 = 90°).

### (4) Refrigerant Leakage Sensor and Control Unit

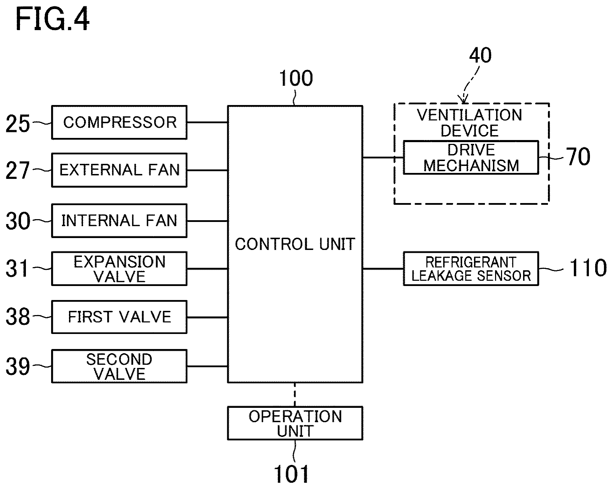

As shown in FIG. 4, the container refrigeration apparatus (10) includes the refrigerant leakage sensor (110) and the control unit (100). The refrigerant leakage sensor (110) detects leakage of the refrigerant from the refrigerant circuit (R). Specifically, the refrigerant leakage sensor (110) outputs a detection signal to the control unit (100) when the concentration of the refrigerant around the refrigerant leakage sensor (110) reaches a predetermined value or more. As shown in FIG. 2, the refrigerant leakage sensor (110) is disposed in the internal storage space (15). Specifically, for example, in the air flow in the internal passage (19), the refrigerant leakage sensor (110) is disposed downstream of the internal heat exchanger (29).

The control unit (100) controls the container refrigeration apparatus (10). The control unit (100) includes a microprocessor, an electric circuit, and an electronic circuit. The microprocessor includes a central processing unit (CPU), a memory, a communication interface, an analog input/output, and a contact input/output interface. The memory stores the programs executed by the CPU and the data employed by the programs.

The control unit (100) controls the mechanical elements of the container refrigeration apparatus (10). The control unit (100) controls the drive mechanism (70) of the ventilation device (40). Specifically, the control unit (100) controls the drive mechanism (70) so that the rotational angle (the current rotational angle (θc)) of the lid (60) converges to a set target value (the target rotational angle (θt)). As shown in FIG. 4, this target value may be a value that the user of the container refrigeration apparatus (10) can set as appropriate through an operation unit (101). The operation unit (101) includes, for example, a touch panel, a remote controller, or a DIP switch provided in the container refrigeration apparatus (10). The operation unit (101) may be a communication terminal connected to the container refrigeration apparatus (10) via a network. The target value is not necessarily set by the user, and may be automatically determined by the control unit (100) based on the operating mode or the operating conditions, for example.

When the refrigerant leakage sensor (110) detects leakage of the refrigerant, the control unit (100) controls the drive mechanism (70) to turn the lid (60) to the closing position.

### (5) Basic Operation of Ventilation Device

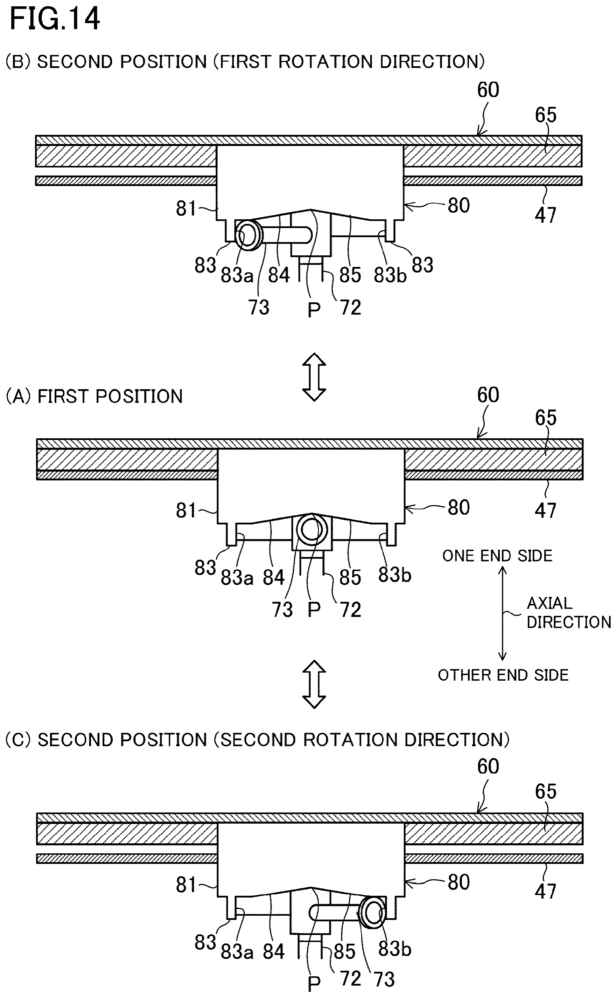

In the ventilation device (40), the lid (60) performs a reciprocating motion and a rotating motion. In the beginning, these motions will be described with reference to FIGS. 14 and 15 in particular. In the following description, "one end in the axial direction" means the end portion of the drive shaft (72) that is close to the lid (60) in the axial direction, and "the other end in the axial direction" means the end portion of the drive shaft (72) that is distant from the lid (60) in the axial direction.

### (5-1) Reciprocating Motion

In the reciprocating motion, when the rod (73) and the second transmission portion (C2) come into contact with each other, the position of the cam mechanism (80) is changed in the axial direction with respect to the rod (73). Accordingly, the relative positions of the lid (60) coupled with the cam mechanism (80) and the base portion (47) are changed in the axial direction. The reciprocating motion includes a first reciprocating motion that corresponds to the first inclined surface (84), and a second reciprocating motion that corresponds to the second inclined surface (85).

### (5-1-1) First Reciprocating Motion

As shown in FIG. 14(A), when the rod (73) of the drive mechanism (70) is located at the top portion (P) of the cam mechanism (80), the cam mechanism (80) is most displaced toward the other end side of the axial direction. In this state, the distance between the lid (60) and the base portion (47) in the axial direction becomes the shortest. As a result, the packing (65) is sandwiched between the lid (60) and the base portion (47), and the packing (65) is pressed toward the base portion (47) by the lid (60). The position shown in FIG. 14(A) is the first position in which the lid (60) compresses the packing (65).

When the motor (71) rotates the drive shaft (72) and also the rod (73) in the first rotation direction (R1) from the state of FIG. 14(A), the rod (73) and the first inclined surface (84) come into contact with each other. As the rod (73) moves in the first rotation direction (R1) and becomes distant from the top portion (P), the cam mechanism (80) moves toward the one end side of the axial direction.

When the rod (73) further moves in the first rotation direction (R1), the rod (73) reaches the first flat surface (86). When the rod (73) still further rotates in the first rotation direction (R1), the rod (73) and the first end surface (83a) of the projecting plate (83) come into contact with each other as shown in FIG. 14(B). In this state, the cam mechanism (80) is most displaced toward the one end side of the axial direction. As a result, the distance between the lid (60) and the base portion (47) in the axial direction becomes the longest, and the packing (65) becomes distant from the base portion (47). The position shown in FIG. 14(B) corresponds to the second position in which the lid (60) is more distant from the base portion (47) than in the first position. When the lid (60) is in the second position, the compression of the packing (65) by the lid (60) is released.

When the motor (71) rotates the drive shaft (72) and also the rod (73) in the second rotation direction (R2) from the state of FIG. 14(B), the rod (73) and the first inclined surface (84) come into contact with each other. As the rod (73) moves in the second rotation direction (R2) and comes closer to the top portion (P), the cam mechanism (80) moves toward the other end side of the axial direction. As shown in FIG. 14(A), when the rod (73) reaches the top portion (P), the packing (65) is compressed by the lid.

In the first reciprocating motion, the first rotational angle range (θd1) in which the rod (73) and the first inclined surface (84) come into contact with each other is set to 45°. In other words, in order to move the rod (73) from the position of FIG. 14(A) to the position of FIG. 14(B), it is necessary to rotate the drive shaft (72) in the first rotation direction (R1) by the first rotational angle range (θd1).

### (5-1-2) Second Reciprocating Motion

When the motor (71) rotates the drive shaft (72) and also the rod (73) in the second rotation direction (R2) from the state of FIG. 14(A), the rod (73) and the second inclined surface (85) come into contact with each other. As the rod (73) moves in the second rotation direction (R2) and becomes distant from the top portion (P), the cam mechanism (80) moves toward the one end side of the axial direction.

When the rod (73) further moves in the second rotation direction (R2), the rod (73) reaches the second flat surface (87). When the rod (73) still further rotates in the second rotation direction (R2), the rod (73) and the second end surface (83b) of the projecting plate (83) come into contact with each other as shown in FIG. 14(C). In this state, the cam mechanism (80) is most displaced toward the one end side of the axial direction. As a result, the distance between the lid (60) and the base portion (47) in the axial direction becomes the longest, and the packing (65) becomes distant from the base portion (47). The position shown in FIG. 14(C) corresponds to the second position in which the lid (60) is more distant from the base portion (47) than in the first position. When the lid (60) is in the second position, the compression of the packing (65) by the lid (60) is released.

When the motor (71) rotates the drive shaft (72) and also the rod (73) in the first rotation direction (R1) from the state of FIG. 14(C), the rod (73) and the second inclined surface (85) come into contact with each other. As the rod (73) moves in the first rotation direction (R1) and comes closer to the top portion (P), the cam mechanism (80) moves toward the other end side of the axial direction. As shown in FIG. 14(A), when the rod (73) reaches the top portion (P), the packing (65) is compressed by the lid.

In the second reciprocating motion, the second rotational angle range (θd2) in which the rod (73) and the second inclined surface (85) come into contact with each other is set to 45°. In other words, in order to move the rod (73) from the position of FIG. 14(A) to the position of FIG. 14(C), it is necessary to rotate the drive shaft (72) in the second rotation direction (R2) by the second rotational angle range (θd2).

### (5-2) Rotating Motion

In the rotating motion, the rotational force of the rod (73) acts on the projecting plate (83), thereby changing the rotational angle of the cam mechanism (80) and eventually the rotational angle of the lid (60). The rotating motion includes a first rotating motion in which the lid (60) increases the opening degree of the ventilation port (VO), and a second rotating motion in which the lid (60) decreases the opening degree of the ventilation port (VO).

### (5-2-1) First Rotating Motion

When the rod (73) is in the position of FIG. 14(B) and the drive shaft (72) rotates in the first rotation direction (R1), the rotational force of the rod (73) acts on the cam mechanism (80) and accordingly the lid (60) performs the first rotating motion. Specifically, when the rod (73) further moves in the first rotation direction (R1) while being in contact with the first end surface (83a) of the projecting plate (83), the cam mechanism (80) and also the lid (60) rotate in the first rotation direction (R1). Then, the lid (60) rotates in order of FIG. 15(A), FIG. 15(B), and FIG. 15(C). Accordingly, the overlapping area of the lid-side opening (CO) and the ventilation port (VO) in the axial direction increases. As a result, the substantial opening area of the ventilation port (VO) increases, and the amount of ventilation of the ventilation device (40) increases.

The position of the lid (60) in FIG. 15(A) is a closing position to fully close the ventilation port (VO). In this state, the entire part of the lid-side opening (CO) is closed by the base portion (47). Specifically, the entire part of the lid-side supply opening (61) overlaps the base portion (47) in the axial direction, and the entire part of the lid-side exhaust opening (62) overlaps the base portion (47) in the axial direction.

The position of the lid (60) in FIG. 15(C) is an opening position (more precisely, the fully opening position) in which the lid (60) fully opens the ventilation port (VO). In this state, the entire part of the lid-side opening (CO) and the entire part of the ventilation port (VO) overlap each other in the axial direction. Specifically, the entire part of the lid-side supply opening (61) and the entire part of the supply port (48) overlap each other in the axial direction, and the entire part of the lid-side exhaust opening (62) and the entire part of the exhaust port (49) overlap each other in the axial direction.

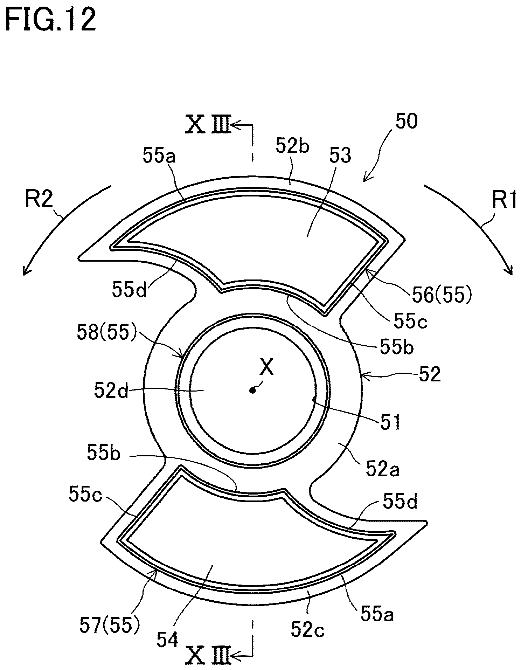

Further, in this state, the lid-side opening (CO) is surrounded by the raised portion (55) of the edge forming plate (52) shown in FIG. 12. As a result, it is possible to reduce the leakage of air or water between the inside and outside of the lid-side opening (CO).

Specifically, the lid-side supply opening (61) and the packing-side supply opening (66) are surrounded by the supply-side raised portion (56) as viewed in the axial direction. Accordingly, the supply-side raised portion (56) compresses the outer edge of the packing (65) that is near the packing-side supply opening (66), and thus it is possible to reduce the leakage of air or water at this part.

The lid-side exhaust opening (62) and the packing-side exhaust opening (67) are surrounded by the exhaust-side raised portion (55) as viewed in the axial direction. Accordingly, the exhaust-side raised portion (55) compresses the outer edge of the packing (65) that is near the packing-side exhaust opening (67), and thus it is possible to reduce the leakage of air or water at this part.

The position of the lid (60) in FIG. 15(B) is the middle position between the closing position and the opening position. The lid (60) in the middle position allows the ventilation port (VO) to open with a predetermined opening area (opening degree).

### (5-2-2) Second Rotating Motion

When the rod (73) is in the position of FIG. 14(C) and the drive shaft (72) rotates in the second rotation direction (R2), the rotational force of the rod (73) acts on the cam mechanism (80) and accordingly the lid (60) performs the second rotating motion. Specifically, when the rod (73) further moves in the second rotation direction (R2) while being in contact with the second end surface (83b) of the projecting plate (83), the cam mechanism (80) and also the lid (60) rotate in the second rotation direction (R2). Then, the lid (60) rotates in order of FIG. 15(C), FIG. 15(B), and FIG. 15(A). Accordingly, the overlapping area of the lid-side opening (CO) and the ventilation port (VO) in the axial direction decreases. As a result, the substantial opening area of the ventilation port (VO) decreases, and the amount of ventilation of the ventilation device (40) decreases.

### (5-3) Control Operation

The control operation of the ventilation device (40) will be described in detail. The control unit (100) controls the rotational angle of the lid (60) within the range from the first rotational angle (θ1 = 0°) shown in FIG. 15(A) to the second rotational angle (θ2 = 90°) shown in FIG. 15(C). The control unit (100) controls the drive mechanism (70) to bring the current rotational angle (θc) of the lid (60) to the target value (the target rotational angle (θt)). At the start of the control operation, the rod (73) is located at the top portion (P), and the lid (60) is located in the first position in which the lid (60) compresses the packing (65) (the position of FIG. 14(A)).

### (5-3-1) Basic Control

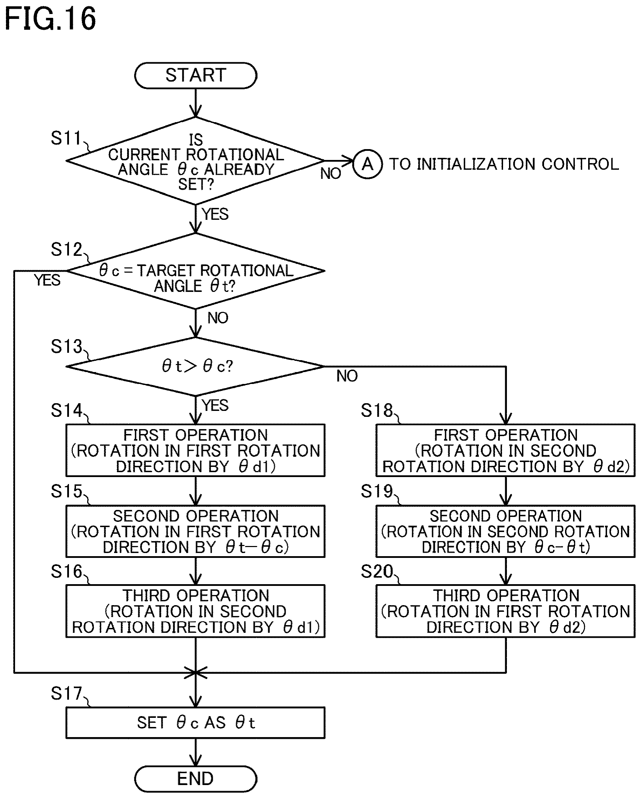

As shown in FIG. 16, in step S11 in the control operation of the ventilation device (40), the control unit (100) determines whether the current rotational angle (θc) is already set. If it is determined in step S11 that the current rotational angle (θc) is not set, the process proceeds to the initialization control which will be described in detail later. If it is determined in step S11 that the current rotational angle (θc) is set, the process proceeds to step S12.

In step S12, the control unit (100) determines whether the current rotational angle (θc) is equal to the target rotational angle (θt). The target rotational angle (θt) is a predetermined value within the range from 0° to 90°. If the current rotational angle (θc) is equal to the target rotational angle (θt), the process proceeds to step S17. In step S17, the target rotational angle (θt) is set as the current rotational angle (θc). The set current rotational angle (θc) is stored in a storage, such as a memory, in the control unit (100). In step S12, if the current rotational angle (θc) is not equal to the target rotational angle (θt), the process proceeds to step S13.

If the target rotational angle (θt) is larger than the current rotational angle (θc) in step S13, the drive mechanism (70) successively performs the first operation of step S14 and the second operation of step S15.

In the first operation of step S14, the drive mechanism (70) moves the lid (60) from the first position of FIG. 14(A) to the second position of FIG. 14(B). Specifically, the drive mechanism (70) rotates the drive shaft (72) in the first rotation direction (R1) by the first rotational angle range (θd1). Accordingly, the compressive force of the packing (65) by the lid (60) is released or reduced.

In the second operation of step S15, the drive mechanism (70) rotates the lid (60) to the target rotational angle (θt) while maintaining the lid (60) at the second position. Specifically, the drive mechanism (70) rotates the drive shaft (72) in the first rotation direction (R1) by the difference (θt - θc) between the target rotational angle (θt) and the current rotational angle (θc).

At this time, since the lid (60) is in the second position shown in FIG. 14(B), the friction force (the frictional resistance) on the packing (65) can be more reduced than when the lid (60) is in the first position. As a result, the power to rotate the lid (60) can be reduced. In addition, the wear can be reduced on the contact portion between the packing (65) and the base portion (47).

Next, in step S16, the drive mechanism (70) performs the third operation to move the lid (60) to the first position while maintaining the lid (60) at the target rotational angle (θt). Specifically, in step S16, the drive mechanism (70) rotates the drive shaft (72) in the second rotation direction (R2) by the first rotational angle range (θd1). Accordingly, the lid (60) comes closest to the base portion (47), compressing the packing (65).

In this manner, after the lid (60) reaches the target rotational angle (θt), the drive mechanism (70) returns the lid (60) to the first position. Accordingly, it is possible to reduce the lid (60) being wobbled by vibration or the like. In addition, it is possible to improve the sealing performance of the packing (65), and thus it is possible to reduce the leakage of air or water from the gap between the lid (60) and the base portion (47).

When the process proceeds from step S16 to step S17, the target rotational angle (θt) is set as the current rotational angle (θc).

If the target rotational angle (θt) is smaller than the current rotational angle (θc) in step S13, the drive mechanism (70) successively performs the first operation of step S18 and the second operation of step S19.

In the first operation of step S18, the drive mechanism (70) moves the lid (60) from the first position of FIG. 14(A) to the second position of FIG. 14(C). Specifically, the drive mechanism (70) rotates the drive shaft (72) in the second rotation direction (R2) by the second rotational angle range (θd2). Accordingly, the compressive force of the packing (65) by the lid (60) is released or reduced.

In the second operation of step S19, the drive mechanism (70) rotates the lid (60) to the target rotational angle (θt) while maintaining the lid (60) at the second position. Specifically, the drive mechanism (70) rotates the drive shaft (72) in the second rotation direction (R2) by the difference (θc - θt) between the current rotational angle (θc) and the target rotational angle (θt).

At this time, since the lid (60) is in the second position shown in FIG. 14(C), the friction force (the frictional resistance) on the packing (65) can be more reduced than when the lid (60) is in the first position. As a result, the power to rotate the lid (60) can be reduced. In addition, the wear can be reduced on the contact portion between the packing (65) and the base portion (47).

Next, in step S20, the drive mechanism (70) performs the third operation to move the lid (60) to the first position while maintaining the lid (60) at the target rotational angle (θt). Specifically, in step S20, the drive mechanism (70) rotates the drive shaft (72) in the first rotation direction (R1) by the second rotational angle range (θd2). Accordingly, the lid (60) comes closest to the base portion (47), compressing the packing (65).

In this manner, after the lid (60) reaches the target rotational angle (θt), the drive mechanism (70) returns the lid (60) to the first position. Accordingly, it is possible to reduce the lid (60) being wobbled by vibration or the like. In addition, it is possible to improve the sealing performance of the packing (65), and thus it is possible to reduce the leakage of air or water from the gap between the lid (60) and the base portion (47).

When the process proceeds from step S16 to step S17, the target rotational angle (θt) is set as the current rotational angle (θc).

### (5-3-2) Initialization Control

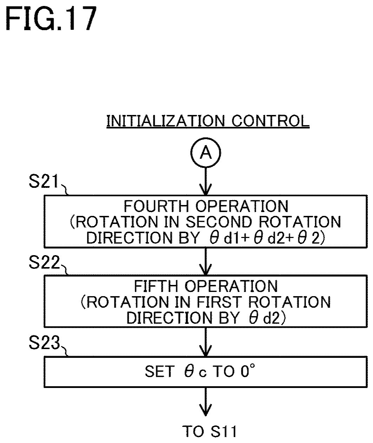

When the container refrigeration apparatus (10) operates for the first time, the current rotational angle (θc) is still not set in step S17 in some cases. For this reason, in step S11, if the current rotational angle (θc) is not set, the control unit (100) performs the initialization control shown in FIG. 17. The control unit (100) may conduct the initialization control in response to a manual input by the user. The control unit (100) may conduct the initialization control in response to a command to turn on or turn off the power of the container refrigeration apparatus (10). The initialization control may be conducted by a manual operation of the user, for example.

In the initialization control, the drive mechanism (70) performs the fourth operation in step S21. In the fourth operation, the drive mechanism (70) rotates the drive shaft (72) in the second rotation direction (R2) by the third rotational angle (θ3). The third rotational angle (θ3) is the sum of the first rotational angle range (θd1), the second rotational angle range (θd2), and the second rotational angle (θ2 = 90°). In this embodiment, the third rotational angle (θ3) is set to 180 degrees, which is the sum of the first rotational angle range (θd1 = 45°), the second rotational angle range (θd2 = 45°), and the second rotational angle (θ2 = 90°). When the fourth operation is conducted, the rod (73) is in the position of FIG. 14(C) and the lid (60) is in the closing position of FIG. 15(A) (the first rotational angle) regardless of the current rotational angle (θc) of the lid (60).

Next, in step S22, the drive mechanism (70) performs the fifth operation. In the fifth operation, the drive mechanism (70) rotates the drive shaft (72) in the first rotation direction (R1) by the second rotational angle range (θd2). Accordingly, the rod (73) in the position shown in FIG. 14(C) is located at the top portion (P) as shown in FIG. 14(A).

Next, in step S23, the control unit (100) sets the current rotational angle (θc) to the first rotational angle (θ1 = 0°). Specifically, the storage unit of the control unit (100) stores the current rotational angle (θc) as 0°.

As described above, in the subsequent control operation of the ventilation device (40), it is possible to adjust the lid (60) from the current rotational angle (θc) to the target rotational angle (θt) while maintaining the lid (60) at the first rotational angle (θ1) and the first position.

### (5-4) Example Control

Next, example control of the ventilation device (40) will be described. The control unit (100) performs fully opening control, fully closing control, and opening degree adjusting control.

### (5-4-1) Fully Opening Control

The fully opening control is the control to fully open the ventilation port (VO). **In** the fully opening control, the target rotational angle (θt) is set to the second rotational angle (θ2 = 90°). The drive mechanism (70) moves the lid (60) to the second position shown in FIG. 14(B) by the first operation, and then moves the lid (60) to the opening position (the fully opening position) shown in FIG. 15(C) by the second operation.

Next, the drive mechanism (70) returns the lid (60) to the first position of FIG. 14(A) by the third operation. Accordingly, the lid (60) in the fully opening position comes into tight contact with the base portion (47) via the packing (65), and thus it is possible to reduce wobbling of the lid (60) and stably support the lid (60). In addition, it is possible to improve the sealing performance of the packing (65), and thus it is possible to reduce the leakage of air or water from the gap between the packing (65) and the base portion (47).

### (5-4-2) Fully Closing Control

The fully closing control is the control to fully close the ventilation port (VO). In the fully closing control, the target rotational angle (θt) is set to the first rotational angle (θ2 = 0°). The drive mechanism (70) moves the lid (60) to the second position of FIG. 14(C) by the first operation, and then moves the lid (60) to the closing position of FIG. 15(A) by the second operation.

Next, the drive mechanism (70) returns the lid (60) to the first position of FIG. 14(A) by the third operation. Accordingly, the lid (60) in the closing position comes into tight contact with the base portion (47) via the packing (65), and thus it is possible to reduce wobbling of the lid (60) and stably support the lid (60). In addition, it is possible to improve the sealing performance of the packing (65), and thus it is possible to reduce the leakage of air or water from the gap between the packing (65) and the base portion (47). In particular, the fully closing control does not include ventilation of the internal space (3) of the container (1), and thus the airtightness of the container (1) is important. This is because if the air of the external space (5) enters the container (1), the quality of stored items may be impaired, or the cooling load of the container refrigeration apparatus (10) may be increased. Therefore, by improving the sealing performance of the packing (65) in the above-described manner, it is possible to ensure the airtightness of the container (1) and avoid the problems.

### (5-4-3) Opening Degree Adjusting Control

The opening degree adjusting control is the control to adjust the opening area of the ventilation port (VO) to a predetermined opening degree. In the opening degree adjusting control, the target rotational angle (θt) of the lid (60) is set to a predetermined rotational angle within the range from 5° to 85°, for example. The drive mechanism (70) moves the lid (60) to the second position of FIG. 14(B) or FIG. 14(C) by the first operation, and then moves the lid (60) to the predetermined middle position of FIG. 15(B) by the second operation.

Next, the drive mechanism (70) returns the lid (60) to the first position of FIG. 14(A) by the third operation. Accordingly, the lid (60) in the middle position comes into tight contact with the base portion (47) via the packing (65), and thus it is possible to reduce wobbling of the lid (60) and stably support the lid (60). In addition, it is possible to improve the sealing performance of the packing (65), and thus it is possible to reduce the leakage of air or water from the gap between the packing (65) and the base portion (47). In the opening degree adjusting control, it is also possible to reduce failure to achieve the intended ventilation amount due to air leakage.

### (6) Advantages of Embodiment

With the structure of manually opening and closing the lid of the ventilation device, it is possible to ensure the sealing performance between the lid and the base portion by tightly fastening the lid toward the base portion. On the other hand, in this embodiment, the drive mechanism (70) automatically opens and closes the ventilation port (VO), and thus it is not possible to manually ensure the sealing performance between the lid and the base portion.

To overcome this, the ventilation device (40) of this embodiment includes the spring (77) as a pressing portion that presses the lid (60) toward the base portion (47). The spring (77) presses the lid (60) in the closing position toward the base portion (47), and thus it is possible to adequately compress the packing (65) between the lid (60) and the base portion (47). As a result, it is possible to reduce the leakage of air or water between the lid (60) and the base portion (47) while automatically opening and closing the ventilation port (VO).

It is possible to improve the airtightness of the container (1) by reducing the leakage of air. In particular, in the fully closing control, it is possible to adequately ensure the airtightness of the container (1) and increase the reliability of the container refrigeration apparatus (10). In the fully opening control and the opening degree adjusting control, it is possible to reduce failure to achieve the intended ventilation amount. By reducing the leakage of air, it is possible to reduce the equipment such as the motor (71) of the ventilation device (40) becoming wet.

The spring (77) of this embodiment is provided in the drive mechanism (70) as shown in FIG. 8. Accordingly, it is possible to provide the spring (77) in the ventilation device (40) while reducing the spring (77) interfering with the lid (60) and the base portion (47). Accordingly, it is possible to downsize the ventilation device (40).

Further, the spring (77) of this embodiment is provided along the drive shaft (72), and thus it is possible to reduce the spring (77) interfering with other components.

Further, in this embodiment, the spring (77) has a helical shape, and the drive shaft (72) is inserted into the spring (77). Accordingly, it is possible to reduce the spring (77) interfering with other components. The spring (77) and the drive shaft (72) are arranged coaxially, and thus it is possible to reduce the spring (77) interfering with other components while the drive shaft (72) is rotating.

In this embodiment, as shown in FIGS. 12 and 13, the raised portion (55) is provided between the lid (60) and the base portion (47). The raised portion (55) projects toward the packing (65), and thus the packing (65) and the distal end of the raised portion (55) can substantially come into line contact with each other. Accordingly, it is possible to improve the sealing performance of the packing (65) at the contact portion with the raised portion (55).

The raised portion (55) of this embodiment comes into contact with the outer edges of the packing-side supply opening (66) and the packing-side exhaust opening (67) of the packing (65) that are openings through which air flows. Accordingly, it is possible to reduce the leakage of air or water at the outer edges of the openings of the packing (65).

In this embodiment, the spring (77) presses the center part of the lid (60) toward the base portion (47), and thus the pressing force of the packing (65) by the spring (77) can be less biased in the circumferential direction. On the other hand, in this case, the pressing force of the packing (65) by the spring (77) decreases from the center part toward the outer edge. To overcome this, in this embodiment, the projecting height of the raised portion (55) increases from the center part of the lid (60) toward the outer edge of the lid (60). Accordingly, it is possible to make the compressive force of the packing (65) uniform in the radial direction, and thus it is possible to improve the sealing performance of the packing (65).

In this embodiment, the drive mechanism (70) moves the lid (60) in the first direction so as to adjust the distance between the lid (60) and the base portion (47). By adjusting this distance, it is possible to adjust the compressive force of the packing (65).

In this embodiment, the lid (60) has the lid-side opening (CO). The drive mechanism (70) rotates the lid (60) so as to adjust the overlapping area of the lid-side opening (CO) and the ventilation port (VO). Accordingly, it is possible to adjust the opening degree of the ventilation port (VO) and eventually the amount of ventilation. It is also possible to reduce the friction force on the packing (65) by increasing the distance between the lid (60) and the base portion (47) when rotating the lid (60). As a result, it is possible to reduce the electric power of the motor (71) and reduce its power consumption. It is possible to reduce the load torque of the motor (71), and thus it is possible to downsize the motor (71). It is possible to reduce the wear of the packing (65), and thus it is possible to reduce the frequency of replacing the packing (65).

The drive mechanism (70) of this embodiment includes the motor (71) as a drive source, and the drive shaft (72) rotationally driven by the motor (71). The drive mechanism (70) is configured to allow the lid (60) to perform a rotating motion in which the lid (60) rotates while the drive shaft (72) rotates and configured to allow the lid (60) to perform a reciprocating motion in which the lid (60) reciprocates in the axial direction as the first direction while the drive shaft (72) rotates.
Accordingly, the rotating motion and the reciprocating motion of the lid (60) can be performed by one motor (71) and one drive shaft (72).

The drive mechanism (70) of this embodiment includes the rod (73) coupled with the drive shaft (72), and the cam mechanism (80) coupled with the lid (60) and having the contact surface (82) which the rod (73) comes into contact with. The contact surface (82) includes the first transmission portion (C1) that transmits a rotational force of the drive shaft (72) to the lid (60) in order to allow the lid (60) to perform a rotating motion, and the second transmission portion (C2) that transmits a rotational force of the drive shaft (72) to the lid (60) in order to allow the lid (60) to perform a reciprocating motion. Accordingly, it is possible to use the rotational force of the drive shaft (72) to allow the lid (60) to perform the reciprocating motion and the rotating motion.

The first transmission portion (C1) of this embodiment includes the first end surface (83a) which is formed along the axial direction and which the rod (73) moving in the first rotation direction (R1) comes into contact with, and the second end surface (83b) which is formed along the axial direction and which the rod (73) moving in the second rotation direction (R2) comes into contact with. The second transmission portion (C2) includes the first inclined surface (84) that comes closer to the other end side of the axial direction (the side opposite to the lid (60)) toward the first end surface (83a), and the second inclined surface (85) that comes closer to the other end of the axial direction toward the second end surface (83b). Accordingly, it is possible to adjust the distance between the lid (60) and the base portion (47) and rotate the lid (60) in the first rotation direction (R1) while rotating the drive shaft (72) in the first rotation direction (R1). It is also possible to adjust the distance between the lid (60) and the base portion (47) and rotate the lid (60) in the second rotation direction (R2) while rotating the drive shaft (72) in the second rotation direction (R2).

The ventilation device (40) of this embodiment includes the rod (73) and the bearing (73b) as the low-friction portion that reduces the friction force between the rod (73) and the contact surface (82) of the cam mechanism (80). Accordingly, it is possible to reduce the friction force between the rod (73) and the bearing (73b) and thus reduce the wear of the rod (73) and the cam mechanism (80). As a result, it is possible to reduce the lid (60) unstably performing the reciprocating motion and the rotating motion due to the wear of those components.

The first flat surface (86) that extends along the plane perpendicular to the axial direction is formed on part of the contact surface (82) of the cam mechanism (80) of this embodiment that is between the first end surface (83a) and the first inclined surface (84). Accordingly, the rod (73) that moves from the first inclined surface (84) to the first end surface (83a) passes through the first flat surface (86) and then comes into contact with the first end surface (83a). As a result, it is possible to reduce the rod (73) coming into contact with both the first inclined surface (84) and the first flat surface (86) at the same time, and thus smoothly shift from the first reciprocating motion to the first rotating motion.

Similarly, the second flat surface (87) that extends along the plane perpendicular to the axial direction is formed on part of the contact surface (82) of the cam mechanism (80) of this embodiment that is between the second end surface (83b) and the second inclined surface (85). Accordingly, the rod (73) that moves from the second inclined surface (85) to the second end surface (83b) passes through the second flat surface (87) and then comes into contact with the second end surface (83b). As a result, it is possible to reduce the rod (73) coming into contact with both the second inclined surface (85) and the second flat surface (87) at the same time, and thus smoothly shift from the second reciprocating motion to the second rotating motion.

The drive shaft (72) of this embodiment is coupled with three or more rods (73). Accordingly, it is possible to disperse the stress between the rod (73) and the contact surface (82) and stably drive the cam mechanism (80). Further, it is possible to reduce the wear between the rod (73) and the contact surface (82).

The drive mechanism (70) of this embodiment performs the first operation to move the lid (60) from the first position to compress the packing (65) to the second position more distant from the base portion (47) than the first position, and the second operation to rotate the lid (60) to the predetermined rotational angle while maintaining the lid (60) at the second position after the first operation. These operations allow the lid (60) to rotate while reducing the friction force of the packing (65), and thus it is possible to reduce the electric power of the motor (71) and reduce its power consumption. It is possible to reduce the load torque of the motor (71), and thus it is possible to downsize the motor (71). It is possible to reduce the wear of the packing (65), and thus it is possible to reduce the frequency of replacing the packing (65).

After the second operation, the drive mechanism (70) of this embodiment performs the third operation to move the lid (60) to the first position while maintaining the lid (60) at the predetermined rotational angle. Accordingly, after the lid (60) is adjusted to the predetermined angle, the lid (60) approaches the base portion (47) by the third operation. Accordingly, it is possible to reduce the lid (60) being wobbled by vibration or the like. In addition, the packing (65) is compressed by the third operation, and thus it is possible to reduce the leakage of air or water.

In this embodiment, the predetermined rotational angle includes the first rotational angle (θ1) at which the entire part of the ventilation port (VO) is closed by the lid (60). In other words, the drive mechanism (70) moves the lid (60) to the closing position and then moves the lid (60) to the first position. When the lid (60) is in the closing position, it is necessary to ensure the airtightness of the container (1). On the other hand, when the lid (60) is in the first position, it is possible to adequately ensure the airtightness of the container (1) because the packing (65) is compressed.

This embodiment provides the control unit (100) that controls the drive mechanism (70) to bring the rotational angle of the lid (60) to the set target value. Accordingly, it is possible to adjust the opening area of the ventilation port (VO) and also the amount of ventilation as appropriate.

When the refrigerant leakage sensor (110) detects the leakage of a refrigerant, the control unit (100) of this embodiment controls the drive mechanism (70) to bring the lid (60) to the closing position. Accordingly, when the refrigerant in the refrigerant circuit (R) leaks, it is possible to reduce this refrigerant leaking from the inside to outside of the container (1).

### (7) Variations

The above embodiment may be modified as follows. Basically, differences from the embodiment will be described in the following description.

### (7-1) First Variation

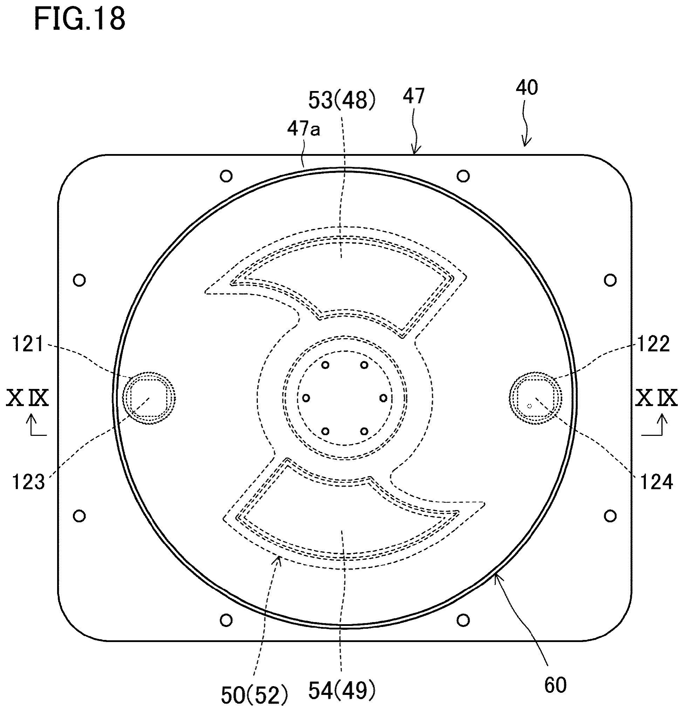

In the ventilation device (40) of the first variation in FIGS. 18 to 20, the lid (60) does not perform the rotating motion and performs only the reciprocating motion. The lid (60) is not provided with the lid-side opening (CO). The packing (65) is not provided with the packing-side supply opening (66) and the packing-side exhaust opening (67). When the lid (60) is distant from the base portion (47), a gap is formed between the outer edge of the lid (60) and the base portion (47). In the first variation, this gap serves as the ventilation port (VO).

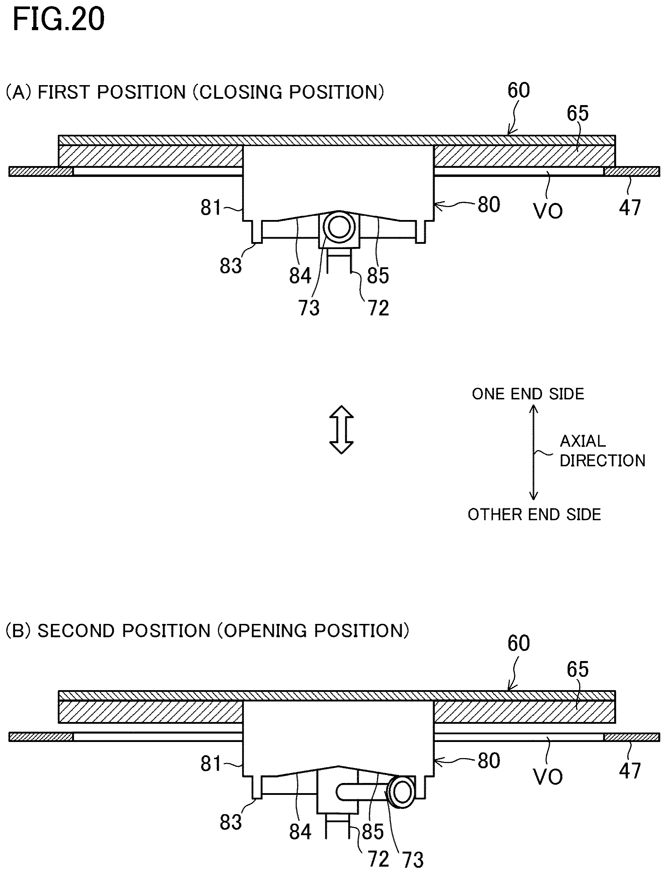

The drive mechanism (70) rotates the drive shaft (72) similarly to the embodiment. The rod (73) comes into contact with the first inclined surface (84) and the second inclined surface (85) as the second transmission portion (C2), whereby the cam mechanism (80) performs the reciprocating motion in the axial direction. As shown in FIG. 20(A), when the lid (60) is in the first position, the packing (65) is sandwiched between the lid (60) and the base portion (47) so that the packing (65) is compressed. In this state, the ventilation port (VO) between the lid (60) and the base portion (47) is closed. In the first variation, when the lid (60) is in the first position (the closing position), the ventilation port (VO) is fully closed. In this state, the packing (65) seals the gap between the lid (60) and the base portion (47), and thus it is possible to adequately ensure the airtightness of the container (1).

As shown in FIG. 20(B), when the lid (60) is in the second position, the lid (60) is distant from the base portion (47), and the ventilation port (VO) is formed between the lid (60) and the base portion (47). In the first variation, when the lid (60) is in the second position (the opening position), the ventilation port (VO) is open. In this state, the compression of the packing (65) by the lid (60) is released.

In the first variation, the drive mechanism (70) moves the lid (60) to adjust the distance between the lid (60) and the base portion (47). As the distance between the lid (60) and the base portion (47) changes, the opening area of the ventilation port (VO) changes. Thus, it is possible to adjust the amount of ventilation by adjusting the position of the lid (60) in the axial direction.

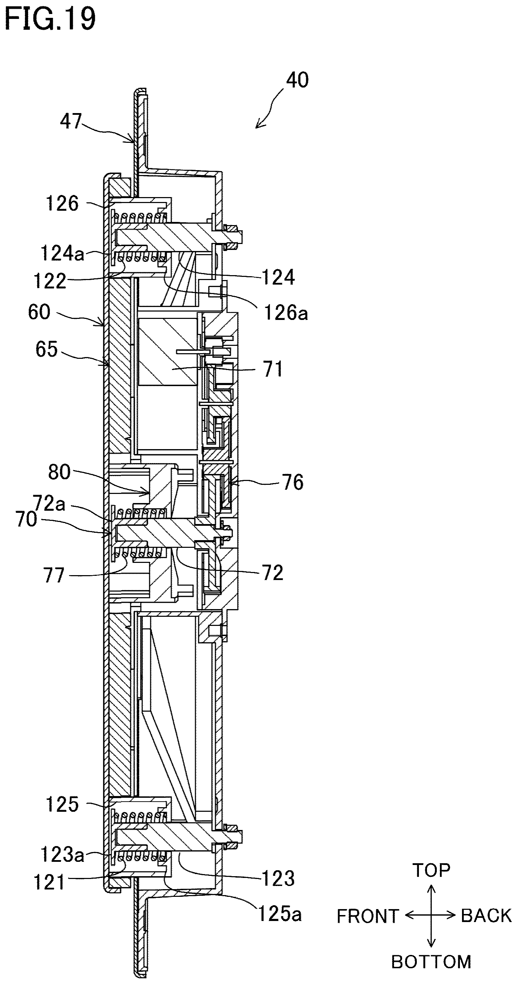

As shown in FIGS. 18 and 19, as pressing portions, the ventilation device (40) includes the first auxiliary spring (121) and the second auxiliary spring (122) in addition to the spring (77) equivalent to that of the embodiment. The first auxiliary spring (121) and the second auxiliary spring (122) are located near the outer circumference of the lid (60). The first auxiliary spring (121) and the second auxiliary spring (122) are opposite to each other while sandwiching the axis (X). The first auxiliary spring (121) and the second auxiliary spring (122) are located between the supply port (48) and the exhaust port (49) as viewed in the axial direction.

The ventilation device (40) is provided with the first pillar member (123), the second pillar member (124), the first coupling member (125), and the second coupling member (126).

The first pillar member (123) and the second pillar member (124) are fixed to part of the base portion (47) that is close to the outer circumference. The first pillar member (123) and the second pillar member (124) extend along the axis (X). The first flange portion (123a) is formed on one end (the front end) of the first pillar member (123) in the axial direction, and the second flange portion (124a) is formed on one end (the front end) of the second pillar member (124) in the axial direction.

The first coupling member (125) and the second coupling member (126) have a tubular shape with the axis extending in the front-back direction. The first coupling member (125) and the second coupling member (126) are fixed to part of the back surface (the rear surface) of the lid (60) that is close to the outer circumference. The first support plate (125a) is formed on the rear side of the first coupling member (125), and the second support plate (126a) is formed on the rear side of the second coupling member (126).

The first auxiliary spring (121) is sandwiched between the first flange portion (123a) and the first support plate (125a). The first auxiliary spring (121) has a helical shape. The first pillar member (123) is inserted into the first auxiliary spring (121). The second auxiliary spring (122) is sandwiched between the second flange portion (124a) and the second support plate (126a). The second auxiliary spring (122) has a helical shape. The second pillar member (124) is inserted into the second auxiliary spring (122).
The biasing force of the first auxiliary spring (121) acts on and moves the first support plate (125a) backward. The biasing force of the second auxiliary spring (122) acts on and moves the second support plate (126a) backward. By these biasing forces, the lid (60) coupled with the first coupling member (125) and the second coupling member (126) is pressed toward the base portion (47). When the lid (60) is pressed onto the base portion (47), the packing (65) between the lid (60) and the base portion (47) is compressed in the thickness direction. Accordingly, the sealing performance of the packing (65) is improved.

### (8) Other Embodiments

The ventilation device (40) may be applied to the container (1) that does not have the refrigeration function.

The container (1) may not be for marine transportation, and may be for land transportation where the container is transported by a vehicle such as a trailer or by rail.

The container refrigeration apparatus (10) may include an air composition adjusting device that adjusts the composition of air, such as oxygen, carbon dioxide, nitrogen, etc., in the internal space (3). The air composition adjusting device adjusts the air in the internal space (3) by using a pressure swing adsorption (PSA) or a gas separation membrane, for example.

The ventilation device (40) may have only the supply function of transporting the air in the external space (5) to the internal space (3) while discharging the air naturally through the exhaust port. The ventilation device (40) may have only the exhaust function of transporting the air in the internal space (3) to the external space (5) while supplying the air naturally through the supply port.

The ventilation device (40) of the above-described embodiment adjusts the opening degree of the ventilation port (VO) by rotating the lid (60). However, the ventilation device (40) may adjust the opening degree of the ventilation port (VO) by adjusting the distance between the lid (60) and the base portion (47) similarly to the first variation.

The base portion (47) may be integrated with the casing body (12) of the container refrigeration apparatus (10).

The sealing member may be another member than the packing as long as being made of an elastic material.

The edge forming member (50) may be integrated with the base portion (47).

The edge forming member (50) may be provided between the lid (60) and the packing (65).

In the first variation, the packing (65) may be fixed to the base portion (47). In this case, an opening that serves as a ventilation port is formed in the packing (65).

The drive source of the drive mechanism (70) is not limited to the motor (71), and may be any drive source as long as allowing the lid (60) to perform the rotating motion and the reciprocating motion.

The drive mechanism (70) may include a drive source to allow the lid (60) to perform the rotating motion and a drive source to allow the lid (60) to perform the reciprocating motion separately.

The first direction may not be the axial direction, and may be another direction as long as it is possible to adjust the distance between the lid (60) and the base portion (47).

The spring (77) may be a leaf spring or an elastic material. The drive shaft (72) may not be inserted into the spring (77). The spring (77) may extend in the axial direction so as to be adjacent to the drive shaft (72).

The pressing portion may not be a spring. The pressing portion presses the lid (60) toward the base portion (47) by using the hydraulic pressure or the refrigerant pressure, for example.

The low-friction portion may be a liquid lubricant such as grease that is applied between the rod (73) and the contact surface (82). The low-friction portion may be a low-friction material formed on at least the surface of the rod (73) or the contact surface (82). The low-friction material is made of a resin material such as polyacetal (POM) or polytetrafluoroethylene (PTFE).

The lid (60) in the second position only has to be more distant from the base portion (47) than the lid (60) in the first position, and is allowed to slightly compress the packing (65).

While the embodiment and variations thereof have been described above, it will be understood that various changes in form and details may be made without departing from the spirit and scope of the claims. The embodiment, the variation thereof, and the other embodiments may be combined and replaced with each other without deteriorating intended functions of the present disclosure.

The expressions such as "first," "second," "third," . . . , described above are used to distinguish the terms to which these expressions are given, and do not limit the number and order of the terms.

### INDUSTRIAL APPLICABILITY

As can be seen from the foregoing description, the present disclosure is useful for a ventilation device.

### DESCRIPTION OF REFERENCE CHARACTERS

- 2: Container Body
- 40: Ventilation Device
- 47: Base Portion
- 55: Raised Portion
- 60: Lid
- 65: Packing (Sealing Member)
- 70: Drive Mechanism
- 71: Motor (Drive Source)
- 72: Drive Shaft
- 73: Rod
- 73b: Bearing (Low-Friction Portion)
- 77: Spring
- 77, 121, 122: Pressing Portion
- 80: Cam Mechanism
- 82: Contact Surface
- 100: Control Unit
- 110: Refrigerant Leakage Sensor
- C1: First Transmission Portion
- C2: Second Transmission Portion
- CO: Lid-Side Opening (Opening)
- VO: Ventilation Port

## Claims

1. A ventilation device comprising:
a base portion (47) having a ventilation port (VO) for allowing an inside and an outside of a container body (2) to communicate with each other;
a lid (60) configured to open and close the ventilation port (VO);
a drive mechanism (70) configured to displace the lid (60) between an opening position and a closing position;
a sealing member (65) located between the base portion (47) and the lid (60) and surrounding the ventilation port (VO); and
a pressing portion (77, 121, 122) configured to press the lid (60) toward the base portion (47).

2. The ventilation device of claim 1, wherein
the pressing portion (77, 121, 122) is provided in the drive mechanism (70).

3. The ventilation device of claim 2, wherein
the drive mechanism (70) includes
a drive source (71) and
a drive shaft (72) driven by the drive source (71), and
the pressing portion (77, 121, 122) includes a spring (77) provided along the drive shaft (72).

4. The ventilation device of any one of claims 1 to 3, wherein
a raised portion (55) projecting toward the sealing member (65) is provided between the lid (60) and the base portion (47).

5. The ventilation device of claim 4, wherein
the pressing portion (77, 121, 122) is configured to press a center part of the lid (60) toward the base portion (47), and
a projecting height of the raised portion (55) increases from the center part of the lid (60) toward an outer edge of the lid (60).

6. The ventilation device of any one of claims 1 to 5, wherein
the drive mechanism (70) is configured to move the lid (60) in a first direction so as to adjust a distance between the lid (60) and the base portion (47).

7. The ventilation device of claim 6, wherein
the lid (60) has an opening (CO), and
the drive mechanism (70) is configured to rotate the lid (60) so as to adjust an overlapping area of the opening (CO) and the ventilation port (VO).

8. The ventilation device of claim 7, wherein
the drive mechanism (70) includes
a drive source (71) and
a drive shaft (72) rotationally driven by the drive source (71), and
the drive mechanism (70) is configured to allow the lid (60) to perform a rotating motion in which the lid (60) rotates while the drive shaft (72) rotates and configured to allow the lid (60) to perform a reciprocating motion in which the lid (60) reciprocates in the first direction while the drive shaft (72) rotates.

9. The ventilation device of claim 8, wherein
the drive mechanism (70) includes
a rod (73) coupled with one of the drive shaft (72) and the lid (60) and
a cam mechanism (80) coupled with the other one of the drive shaft (72) and the lid (60) and having a contact surface (82) which the rod (73) comes into contact with, and
the contact surface (82) includes a first transmission portion (C1) that transmits a rotational force of the drive shaft (72) to the lid (60) in order to allow the lid (60) to perform the rotating motion and a second transmission portion (C2) that transmits the rotational force of the drive shaft (72) to the lid (60) in order to allow the lid (60) to perform the reciprocating motion.

10. The ventilation device of claim 9, further comprising:
a low-friction portion (73b) configured to reduce a friction force between the rod (73) and the contact surface (82) of the cam mechanism (80).

11. The ventilation device of claim 9 or 10, wherein
the rod (73) includes three or more rods (73) coupled with the drive shaft (72).

12. The ventilation device of any one of claims 7 to 11, wherein
the drive mechanism (70) is configured to perform
a first operation to move the lid (60) from a first position to compress the sealing member (65) to a second position more distant from the base portion (47) than the first position, and
a second operation to rotate the lid (60) to a predetermined rotational angle while maintaining the lid (60) at the second position after the first operation.

13. The ventilation device of claim 12, wherein
after the second operation, the drive mechanism (70) is configured to perform a third operation to move the lid (60) to the first position while maintaining the lid (60) at the predetermined rotational angle.

14. The ventilation device of claim 13, wherein
the predetermined rotational angle includes a first rotational angle at which an entire part of the ventilation port (VO) is closed by the lid (60).

15. The ventilation device of any one of claims 7 to 14, further comprising:
a control unit (100) configured to control the drive mechanism (70) to bring a rotational angle of the lid (60) to a set target value.

16. The ventilation device of any one of claims 1 to 15, further comprising:
a refrigerant leakage sensor (110) configured to detect leakage of a refrigerant; and
a control unit (100) configured to control the drive mechanism (70) to turn the lid (60) to a closing position when the refrigerant leakage sensor (110) detects leakage of the refrigerant.
